(19) **Europäisches Patentamt / European Patent Office / Office européen des brevets**

(11) **EP 4 561 229 A1**

(12) **EUROPEAN PATENT APPLICATION**
published in accordance with Art. 153(4) EPC

(43) Date of publication:
**28.05.2025 Bulletin 2025/22**

(21) Application number: **23851428.5**

(22) Date of filing: **28.06.2023**

(51) International Patent Classification (IPC):
**H04W 72/04** (2023.01)

(52) Cooperative Patent Classification (CPC):
**H04W 72/04**

(86) International application number:
**PCT/CN2023/103505**

(87) International publication number:
**WO 2024/032201 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.08.2022 CN 202210969867**

(71) Applicant: **Huawei Technologies Co., Ltd.**
**Shenzhen, Guangdong 518129 (CN)**

(72) Inventors:
- **QI, Hong**
  **Shenzhen, Guangdong 518129 (CN)**
- **SU, Hongjia**
  **Shenzhen, Guangdong 518129 (CN)**
- **LU, Lei**
  **Shenzhen, Guangdong 518129 (CN)**
- **YI, Feng**
  **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **COMMUNICATION METHOD AND APPARATUS**

(57)    This application provides a communication method and apparatus, to resolve a problem that a resource waste is caused because a terminal device using a shared resource cannot access a channel. The method may be applied to a sidelink system. The method includes: A first terminal device receives first sidelink control information from at least one second terminal device, where the first sidelink control information indicates a first slot, and the first slot is used by the at least one second terminal device to send sidelink information. When the first terminal device determines that the first slot is within a channel occupancy time, the first terminal device may send first indication information to the at least one second terminal device, where the first indication information indicates a first channel access type.

FIG. 9

## Description

This application claims priority to Chinese Patent Application No. 202210969867.2, filed with the China National Intellectual Property Administration on August 12, 2022 and entitled "COMMUNICATION METHOD AND APPARATUS", which is incorporated herein by reference in its entirety.

## TECHNICAL FIELD

This application relates to the communication field, and in particular, to a communication method and apparatus.

## BACKGROUND

In wireless network communication defined in the 3rd generation partnership project (3rd generation partnership project, 3GPP), from the perspective of an air interface, terminal devices may directly communicate with each other through a near field communication (proximity communication 5, PC5) interface, and therefore the communication manner may be referred to as PC5 communication; and from the perspective of a link, terminal devices may directly communicate with each other through a sidelink (sidelink, SL), and therefore the communication manner may be referred to as SL communication.

In a wireless communication system, frequency bands used by a communication device may be classified into a licensed (Licensed) frequency band and an unlicensed (Unlicensed) frequency band. In the licensed frequency band, the communication device uses a spectrum resource based on scheduling of a central node. In the unlicensed frequency band, the communication device contends for a channel by using a listen before talk (listen before talk, LBT) mechanism.

Currently, an unlicensed spectrum resource may be shared between terminal devices, and this manner may be referred to as side link-unlicensed (sidelink-unlicensed, SL-U) communication. For example, after obtaining a channel through contention by using an LBT mechanism, the terminal device may obtain a channel occupancy time (channel occupancy time, COT). Further, the terminal device may share a corresponding spectrum resource in the COT with another terminal device, so that after receiving COT sharing information, the another terminal device accesses the channel through LBT at a specified time, to send data by using the shared spectrum resource.

However, when the terminal device shares a spectrum resource with a plurality of terminal devices in the foregoing manner, the plurality of terminal devices that complete LBT in a same slot access a channel in a next slot of the slot in which LBT is completed, and may congest each other. Consequently, a part of the terminal devices cannot access the channel to send data by using the shared resource, causing a resource waste.

## SUMMARY

This application provides a communication method and apparatus, to resolve a problem that a resource waste is caused because a terminal device using a shared resource cannot access a channel.

According to a first aspect, a communication method is provided. The method may be performed by a first terminal device, or may be performed by a component of the first terminal device, such as a processor, a chip, or a chip system of the first terminal device, or may be implemented by a logical module or software that can implement all or some functions of the first terminal device. An example in which the method is performed by the first terminal device is used below for description. The communication method includes: The first terminal device receives first sidelink control information from at least one second terminal device, where the first sidelink control information indicates a first slot, and the first slot is used by the at least one second terminal device to send sidelink information. The first terminal device determines that the first slot is within a channel occupancy time COT. The first terminal device sends first indication information to the at least one second terminal device, where the first indication information indicates a first channel access type.

Based on the communication method in the first aspect, when sharing a resource with the second terminal device, the first terminal device may indicate the second terminal device to use a channel access manner of a specified type, so that the second terminal device can access a channel in the channel access manner of the specified type, thereby improving resource utilization.

In a possible design solution, the first indication information may be carried in second sidelink control information or media access control MAC signaling.

In a possible design solution, the first indication information may be carried in COT indication information.

In a possible design solution, the COT indication information further indicates resource sharing information. In this way, the first indication information is sent together with the resource sharing information, so that signaling overheads can be reduced.

In a possible design solution, the first indication information may be a field in the COT indication information.

Optionally, the COT indication information may be sidelink control information.

Optionally, the first channel access type may be any one of Type2A listen before talk LBT, Type2B LBT, or Type2C LBT. In this way, with reference to an application scenario or the like, the first terminal device may select Type2 LBT based on execution durations of different types of LBT, and indicate Type2 LBT to the second terminal device, so that channel access reliability can be improved.

In a possible design solution, the first indication information may be indicated by a first bit field, and different bit values of the first bit field indicate any one of the following first channel access types: Type2A LBT, Type2B LBT, or Type2C LBT.

In a possible design solution, the first bit field is one or more bits.

According to a second aspect, a communication method is provided. The method may be performed by a second terminal device, or may be performed by a component of the second terminal device, such as a processor, a chip, or a chip system of the second terminal device, or may be implemented by a logical module or software that can implement all or some functions of the second terminal device. An example in which the method is performed by the second terminal device is used below for description. The communication method includes: The second terminal device sends first sidelink control information to a first terminal device, where the first sidelink control information indicates a first slot, and the first slot is used by the second terminal device to send sidelink information. The second terminal device accesses a channel based on a first channel access type, where the first channel access type is indicated by first indication information or the first channel access type is preconfigured.

Based on the communication method in the second aspect, a second terminal device using a shared resource may perform channel access by using a preconfigured fixed channel access manner or based on a channel access type indicated by the first indication information sent by the first terminal device. This can ensure that the second terminal device can perform LBT channel access at a specified moment in a channel access manner of a specified type regardless of whether collision access exists, can avoid a problem that a terminal device that completes channel access later cannot access a channel and cannot use a shared resource because terminal devices using shared resources use different channel access manners, and can enable a terminal device that transmits a high-priority service on a reserved resource to successfully use a shared resource, thereby ensuring quality of service (quality of service, QoS) of a high-priority service, improving resource utilization, and avoiding a resource waste.

In a possible design solution, when the first channel access type is indicated by the first indication information, the communication method provided in this embodiment of this application further includes: The second terminal device receives the first indication information from the first terminal device, where the first indication information may indicate the first channel access type.

In a possible design solution, the first indication information may be carried in second sidelink control information or MAC signaling.

In a possible design solution, the first indication information may be carried in COT indication information.

Optionally, the COT indication information may be sidelink control information.

In a possible design solution, the first indication information may be a field in the COT indication information.

Optionally, the first channel access type may be any one of Type2A listen before talk LBT, Type2B LBT, or Type2C LBT.

In a possible design solution, the first indication information may be indicated by a first bit field, and different bit values of the first bit field indicate any one of the following first channel access types: Type2A LBT, Type2B LBT, or Type2C LBT.

In a possible design solution, the first bit field is one or more bits.

In another possible design solution, when the first channel access type is preconfigured, the first channel access type is configured for a plurality of terminal devices, and the second terminal device is one of the plurality of terminal devices.

In a possible design solution, the plurality of terminal devices further include a third terminal device, the third terminal device is a terminal device that accesses a channel by using the preconfigured first channel access type and sends sidelink information on a first resource, the first resource is a resource indicated by a fourth terminal device to the third terminal device, the fourth terminal device and the first terminal device access a same channel, the first resource and a second resource of the first terminal device are frequency domain resources that do not overlap in the first slot, and the second resource is a resource used by the second terminal device to send sidelink information.

According to a third aspect, a communication apparatus is provided. The communication apparatus includes a processing module and a transceiver module. The transceiver module is configured to receive first sidelink control information from at least one second terminal device, where the first sidelink control information indicates a first slot, and the first slot is used by the at least one second terminal device to send sidelink information. The processing module is configured to determine that the first slot is within a channel occupancy time COT. The transceiver module is further configured to send first indication information to the at least one second terminal device, where the first indication information indicates a first channel access type.

In a possible design solution, the first indication information may be carried in second sidelink control information or media access control MAC signaling.

In a possible design solution, the first indication information may be carried in COT indication information.

In a possible design solution, the COT indication information further indicates resource sharing information.

Optionally, the COT indication information may be sidelink control information.

In a possible design solution, the first indication information may be a field in the COT indication information.

Optionally, the first channel access type may be any one of Type2A listen before talk LBT, Type2B LBT, or Type2C LBT.

In a possible design solution, the first indication information may be indicated by a first bit field, and different bit values of the first bit field indicate any one of the following first channel access types: Type2A LBT, Type2B LBT, or Type2C LBT.

In a possible design solution, the first bit field is one or more bits.

Optionally, the transceiver module may include a receiving module and a sending module. The sending module is configured to implement a sending function of the communication apparatus according to the third aspect, and the receiving module is configured to implement a receiving function of the communication apparatus according to the third aspect.

Optionally, the communication apparatus according to the third aspect may further include a storage module. The storage module stores a program or instructions. When the processing module executes the program or the instructions, the communication apparatus according to the third aspect can perform the method according to the first aspect.

It should be noted that the communication apparatus according to the third aspect may be a terminal device, or may be a chip (system) or another component or part that may be disposed in the terminal device, or may be an apparatus including the terminal device. This is not limited in this application.

For technical effects of the communication apparatus according to the third aspect, refer to the technical effects of the method according to the first aspect. Details are not described herein again.

According to a fourth aspect, a communication apparatus is provided. The communication apparatus includes a processing module and a transceiver module. The transceiver module is configured to send first sidelink control information to a first terminal device, where the first sidelink control information indicates a first slot, and the first slot is used by the communication apparatus to send sidelink information. The processing module is configured to access a channel based on a first channel access type, where the first channel access type is indicated by first indication information or the first channel access type is preconfigured.

In a possible design solution, when the first channel access type is indicated by the first indication information, the transceiver module is further configured to receive the first indication information from the first terminal device, where the first indication information indicates the first channel access type.

In a possible design solution, the first indication information may be carried in second sidelink control information or media access control MAC signaling.

In a possible design solution, the first indication information may be carried in COT indication information.

In a possible design solution, the COT indication information further indicates resource sharing information.

Optionally, the COT indication information may be sidelink control information.

In a possible design solution, the first indication information may be a field in the COT indication information.

Optionally, the first channel access type is any one of Type2A listen before talk LBT, Type2B LBT, or Type2C LBT.

In a possible design solution, the first indication information may be indicated by a first bit field, and different bit values of the first bit field indicate any one of the following first channel access types: Type2A LBT, Type2B LBT, or Type2C LBT.

In a possible design solution, the first bit field is one or more bits.

In another possible design solution, when the first channel access type is preconfigured, the first channel access type is configured for a plurality of terminal devices, and the communication apparatus according to the fourth aspect is one of the plurality of terminal devices.

In a possible design solution, the plurality of terminal devices further include a third terminal device, the third terminal device is a terminal device that accesses a channel by using the preconfigured first channel access type and sends sidelink information on a first resource, the first resource is a resource indicated by a fourth terminal device to the third terminal device, the fourth terminal device and the first terminal device access a same channel, the first resource and a second resource of the first terminal device are frequency domain resources that do not overlap in the first slot, and the second resource is a resource used by the communication apparatus to send sidelink information.

Optionally, the transceiver module may include a receiving module and a sending module. The sending module is configured to implement a sending function of the communication apparatus according to the fourth aspect, and the receiving module is configured to implement a receiving function of the communication apparatus according to the fourth aspect.

Optionally, the communication apparatus according to the fourth aspect may further include a storage module. The storage module stores a program or instructions. When the processing module executes the program or the instructions, the communication apparatus according to the fourth aspect can perform the method according to the second aspect.

It should be noted that the communication apparatus according to the fourth aspect may be a terminal device, or may be a chip (system) or another component or part that may be disposed in the terminal device, or may be an apparatus including the terminal device. This is not limited in this application.

For technical effects of the communication apparatus according to the fourth aspect, refer to the technical effects of the method according to the second aspect. Details are not described herein again.

According to a fifth aspect, a communication apparatus is provided. The communication apparatus includes a processor. The processor is coupled to a memory. The processor is configured to execute a computer program stored in the memory, so that the communication apparatus according to the fifth aspect can perform the method according to any one of the possible implementations of the first aspect or the second aspect.

In a possible design solution, the communication apparatus according to the fifth aspect may further include a transceiver. The transceiver may be a transceiver circuit or an interface circuit. The transceiver may be used by the communication apparatus according to the fifth aspect to communicate with another communication apparatus.

In this application, the communication apparatus according to the fifth aspect may be the first terminal device in the first aspect or the second terminal device in the second aspect, or a chip (system) or another component or part that may be disposed in the first terminal device or the second terminal device, or an apparatus including the first terminal device or the second terminal device.

For technical effects of the communication apparatus according to the fifth aspect, refer to the technical effects of the method according to the first aspect. Details are not described herein again.

According to a sixth aspect, a communication system is provided. The communication system includes a first terminal device and at least one second terminal device. The first terminal device is configured to perform the communication method according to the first aspect, and the second terminal device is configured to perform the communication method according to the second aspect.

According to a seventh aspect, a communication system is provided. The communication system includes a first terminal device and at least a second terminal device. The first terminal device is configured to perform the communication method according to the first aspect, and the second terminal device is configured to perform the communication method according to the second aspect.

According to an eighth aspect, a computer-readable storage medium is provided. The computer-readable storage medium stores a computer program or instructions. When the computer program or the instructions are run on a computer, the computer is enabled to perform the method according to any one of the possible implementations of the first aspect or the second aspect.

According to a ninth aspect, a computer program product is provided. The computer program product includes a computer program or instructions. When the computer program or the instructions are run on a computer, the computer is enabled to perform the method according to any one of the possible implementations of the first aspect or the second aspect.

According to a tenth aspect, a communication method is provided. The method includes: A second terminal device sends first sidelink control information to a first terminal device, where the first sidelink control information indicates a first slot, and the first slot is used by the second terminal device to send sidelink information. The first terminal device determines that the first slot is within a channel occupancy COT, and sends first indication information to the second terminal device, where the first indication information indicates a first channel access type. The second terminal device accesses a channel by using the first channel access type.

According to an eleventh aspect, a communication method is provided. The method includes: A first terminal device receives first sidelink control information from at least one second terminal device, where the first sidelink control information indicates a first slot, and the first slot is used by the at least one second terminal device to send sidelink information. The first terminal device determines that the first slot is within a channel occupancy time COT. The first terminal device sends first indication information to the at least one second terminal device, where the first indication information indicates a length of a first cyclic prefix extension CPE or indicates the at least one second terminal device to send CPEs of a same length.

## BRIEF DESCRIPTION OF DRAWINGS

FIG. 1 is a diagram of a structure of a frame structure when a subcarrier spacing is 30 kHz according to an embodiment of this application;
FIG. 2 is a diagram of a structure of COT sharing during sidelink communication according to an embodiment of this application;

FIG. 3 is a diagram of a structure of CPE replication according to an embodiment of this application;

FIG. 4 is a diagram of a structure of resource interlacing when a subcarrier spacing is 15 kHz according to an embodiment of this application;

FIG. 5 is a diagram of a structure of a sub-channel according to an embodiment of this application;

FIG. 6 is a diagram of a scenario in which mutual congestion occurs when UEs perform COT sharing according to an embodiment of this application;

FIG. 7 is a diagram of another scenario in which mutual congestion occurs when UEs perform COT sharing according to an embodiment of this application;

FIG. 8 is a diagram of an architecture of a communication system according to an embodiment of this application;

FIG. 9 is a schematic flowchart of a communication method according to an embodiment of this application;

FIG. 10 is a schematic flowchart of another communication method according to an embodiment of this application;

FIG. 11 is a diagram of a scenario in which one UE shares a resource with a plurality of UEs according to an embodiment of this application;

FIG. 12 is a schematic flowchart of still another communication method according to an embodiment of this application;

FIG. 13 is a diagram of a scenario in which different UEs share resources with different UEs according to an embodiment of this application;

FIG. 14 is a diagram of a structure of a communication apparatus according to an embodiment of this application; and

FIG. 15 is a diagram of a structure of another communication apparatus according to an embodiment of this application.

## DESCRIPTION OF EMBODIMENTS

For ease of understanding, the following first describes related technologies in embodiments of this application.

In a wireless communication network defined in 3GPP, from the perspective of an air interface, an air interface for direct communication between terminal devices is a PC5 interface, and therefore the communication manner may be referred to as PC5 communication. From the perspective of a link, a link for direct communication between terminal devices is an SL, and therefore the communication manner may be referred to as SL communication.

In a wireless communication system, different used frequency bands may be classified into a licensed frequency band and an unlicensed frequency band. The unlicensed frequency band may also be referred to as an unlicensed frequency band. With explosive growth of 5G services, an existing licensed spectrum cannot meet a service requirement. Therefore, a 5G new radio in unlicensed spectrum (5th generation new radio in unlicensed spectrum, 5G NR-U) technology starts to be applied. NR-U-based sidelink communication is an important evolution direction. A communication device used in an NR-U system may be referred to as an NR-U device. The NR-U device may be a network device, or may be a terminal device.

The following describes technical terms in this application.

(1) Frame structure

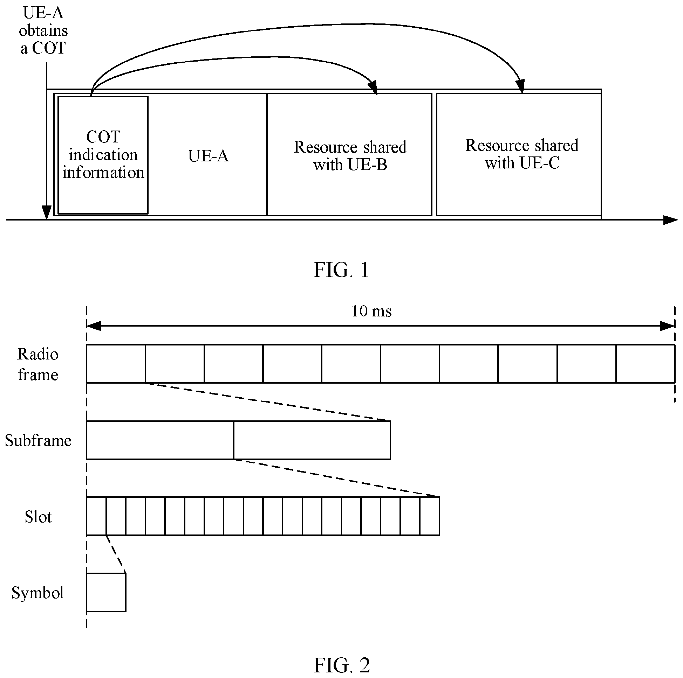

For example, FIG. 1 is a diagram of a structure of a frame structure when a subcarrier spacing is 30 kilohertz (kilohertz, kHz). As shown in FIG. 1, when a subcarrier spacing used for wireless transmission is 30 kHz, a duration of one radio frame (radio frame) is 10 milliseconds (millisecond, ms), one radio frame includes 10 subframes (subframe), one subframe includes two slots (slot), one slot includes 14 orthogonal frequency division multiplexing (orthogonal frequency division multiplexing, OFDM) symbols (symbol), and a duration of the OFDM symbol is related to the subcarrier spacing.

It should be noted that, in addition to the radio frame structure shown in FIG. 1, the frame structure also has a mini-slot (mini-slot) design. The mini-slot is not a slot including 14 symbols, a quantity of symbols in the mini-slot is very flexible, and a value range of the quantity of symbols in the mini-slot is {2, 3, 4, ..., 13}. For specific structure descriptions, refer to related existing descriptions. Details are not described in embodiments of this application.

(2) LBT mechanism

In an unlicensed frequency band, a terminal device needs to use a spectrum resource in a contention manner. For example, the terminal device contends for a channel in an LBT manner. LBT is used as a random back-off (random back-off)-based channel access rule. Before accessing a channel, the terminal device needs to sense (sense) whether the channel is idle (idle). If the terminal device senses that the channel has been idle for a specific time, the terminal device may occupy the channel. If the terminal device senses that the channel is not idle, the terminal device may occupy the channel only after the channel is restored to idle.

Currently, an LBT channel access manner generally uses energy detection (energy detection, ED) and carrier sense (carrier sense, CS). For example, when it is determined, through energy detection, whether a channel is idle, if detected energy exceeds a detection threshold, it is detected that the channel is not idle or is busy, and access to the channel is not allowed; or if detected energy is less than a detection threshold for a period of time, it is detected that the channel is idle, and access to the channel is allowed. The NR-U device uses the following four types of LBT:

Category1 LBT (Category 1 LBT): sent immediately after a short switching gap (switching gap). Category1 LBT is referred to as Cat1 LBT for short, and is used by the NR-U device to perform sending immediately after a switching gap from a receiving state to a sending state in a COT. The switching gap cannot be greater than 16 microseconds (microsecond, $\mu$s).

Category2 LBT (Category2 LBT): LBT without random back-off. Category2 LBT is referred to as Cat2 LBT for short, and is used by the NR-U device to perform sending without performing random back-off after the NR-U device detects, through listening, that a channel is in an idle state for a determined time.

Category3 LBT (Category3 LBT): LBT with random back-off with a fixed-size contention window (contention window, CW). Category3 LBT is referred to as Cat3 LBT for short, and is used by the NR-U device to perform sending after the NR-U device generates a random number N based on the fixed-size contention window and detects, through listening, that a channel is in an idle state for a time determined based on the random number N. A size of the contention window is related to a minimum value and a maximum value of N.

Category4 LBT (Category4 LBT): LBT with random back-off with a variable-size contention window. Category4 LBT is referred to as Cat4 LBT for short, and is used by the NR-U device to perform sending after the NR-U device generates a random number N based on the variable-size contention window and detects, through listening, that a channel is in an idle state for a time determined based on the random number N. A size of the contention window is related to a minimum value and a maximum value of N, and the NR-U device may change the size of the contention window.

Cat4 LBT may also be referred to as Type1 LBT. The NR-U device can access a channel and send data only after performing random back-off. Type1 LBT may be implemented by performing the following steps.

Step 1-1: Set $N = N_{init}$, where N and $N_{init}$ are positive integers, N is a count value, $N_{init}$ is a random number evenly distributed between 0 and $CW_p$, $CW_p$ is a contention window value, and $CW_{min,p} \leq CW_p \leq CW_{max,p}$.

Step 1-2: The NR-U device selects a countdown counter, that is, $N = N - 1$.

Step 1-3: The NR-U device detects a channel based on a time granularity of $T_{sl}$=9 $\mu$s; and if the NR-U device detects, through listening in the time granularity $T_{sl}$, that the channel is idle, performs step 1-4; or if the NR-U device detects, through listening in the time granularity $T_{sl}$, that the channel is busy, performs step 1-5, where $T_{sl}$ is a listening slot period.

The NR-U device may immediately send information after the NR-U device detects ("detects" may also be replaced with "senses"), through listening in a sensing slot duration (sensing slot duration, denoted as $T_{sl}$) of a period of continuous detection (defer sensing, denoted as $T_d$) time, that the channel is idle and after the counter N is zero in step 1-4. Otherwise, additional $T_d$ is required to continue listening, for example, step 1-5 and step 1-6 are performed.

Step 1-4: If $N = 0$, the NR-U device stops back-off; or if $N>0$, performs step 1-2. Step 1-5: The NR-U device continues channel listening until the NR-U device detects, through listening in one $T_{sl}$ in another $T_d$, that a channel is busy, or detects, through listening in all $T_{sl}$ in another $T_d$, that a channel is idle, where $T_d = T_f + m_p \times T_{sl}$, $T_d$ is a period of continuous detection time, $T_f$ is a duration 16 $\mu$s, and $m_p \times T_{sl}$ is $m_p$ consecutive listening slot periods.

Step 1-6: If the NR-U device detects, in all $T_{sl}$ in another $T_d$, that the channel is idle, the NR-U device performs step 1-4; otherwise, the NR-U device performs step 1-5.

It should be noted that $CW_{min,p}$, $CW_{max,p}$, and $m_p$ are determined based on a channel access priority level p associated with transmission of the NR-U device, as shown in Table 1 and Table 2. Table 1 shows a correspondence between a channel access priority level and a contention window value, a quantity of listening slot periods, and a channel occupancy time in a downlink transmission process. Table 2 shows a correspondence between a channel access priority level and a contention window value, a quantity of listening slot periods, and a channel occupancy time in an uplink transmission process.

Table 1

| Channel access priority level (p) | $m_p$ | $CW_{min,p}$ | $CW_{max,p}$ | $T_{m\ cot,p}$ | Allowed value of $CW_p$ |
|---|---|---|---|---|---|
| 1 | 1 | 3 | 7 | 2 ms | {3, 7} |
| 2 | 1 | 7 | 15 | 3 ms | {7, 15} |
| 3 | 3 | 15 | 63 | 8 ms or 10 ms | {15, 31, 63} |
| 4 | 7 | 15 | 1023 | 8 ms or 10 ms | {15, 31, 63, 127, 255, 511, 1023} |

Table 2

| Channel access priority level (p) | $m_p$ | $CW_{min,\,p}$ | $CW_{max,\,p}$ | $T_{m\,cot,\,p}$ | Allowed value of $CW_p$ |
|---|---|---|---|---|---|
| 1 | 2 | 3 | 7 | 2 ms | {3, 7} |
| 2 | 2 | 7 | 15 | 4 ms | {7, 15} |
| 3 | 3 | 15 | 1023 | 6 ms or 10 ms | {15, 31, 63, 127, 255, 511, 1023} |
| 4 | 7 | 15 | 1023 | 6 ms or 10 ms | {15, 31, 63, 127, 255, 511, 1023} |

It can be learned from Table 1 and Table 2 that a channel access process is performed based on the channel access priority level p associated with transmission of the NR-U device, and a COT obtained after channel access is performed does not exceed $T_{m\,cot,\,p}$.

The value of $CW_p$ in step 1-1 may be adjusted according to the following steps before step 1-1:

Step 0-1: For each channel access priority level p $\in$ {1,2,3,4}, set $CW_p = CW_{min,\,p}$.
Step 0-2: For a feedback HARQ-ACK value corresponding to data sent by the NR-U device in a reference subframe, if a proportion of a NACK in the feedback value is greater than or equal to 80%, increase the value of $CW_p$ corresponding to each channel access priority level p $\in$ {1,2,3,4} to a next higher allowed value, for example, adjust the value of $CW_p$ corresponding to p=1 from $CW_{min,p}$=3 to 7, and continue ACK/NACK determining; otherwise, perform step 0-1. The reference subframe is a start subframe of latest transmission by the NR-U device on a channel.

Cat2 LBT includes the following three types of LBT:

Type2A LBT: Cat2 LBT with a gap of 25 $\mu$s. After detecting, through listening, that a channel is idle for 25 $\mu$s, the NR-U device may access the channel and send data.
Type2B LBT: Cat2 LBT with a gap of 16 $\mu$s. After detecting, through listening, that a channel is idle for 16 $\mu$s, the NR-U device may access the channel and send data.
Type2C LBT: Cat1 LBT with a gap of up to 16 $\mu$s. The NR-U device does not need to perform channel listening, and may directly access a channel and send data after a switching gap of up to 16 $\mu$s in a COT.

In SL-U, an unlicensed spectrum resource may be shared between different terminal devices, and a shared terminal device may send and receive data by using the shared spectrum resource. For example, after obtaining a channel through contention by using LBT, the terminal device may obtain a COT, where the COT is a time in which the terminal device is allowed to occupy the channel after the terminal device successfully accesses the channel. In addition, the terminal device may share a resource in the COT with another terminal device. Correspondingly, the another terminal device may send data by using the shared resource. The terminal device sharing the resource usually obtains the COT by contending for the channel by using Type1 LBT, and the terminal device using the shared resource usually accesses the channel by using Type2A LBT, Type2B LBT, or Type2C LBT.

For example, FIG. 2 is a diagram of a structure of COT sharing during sidelink communication. As shown in FIG. 2, UE-A may obtain a channel through contention by using Type1 LBT and obtain a COT, and UE-A may share a resource in the COT with UE-B and UE-C. For example, UE-A may send COT indication information to UE-B and UE-C in a COT actually used by UE-A, where the COT indication information indicates a shared resource. Correspondingly, UE-B and UE-C receive and parse the COT indication information, access the COT in a specified time based on the COT indication information by using Type2A, Type2B, or Type2C, to complete data sending.

In addition, because a terminal device in SL-U is limited by a design of a frame structure, after the terminal device completes LBT, that is, completes an entire process of channel listening, a slot boundary needs to be considered. If an end time point at which the terminal device completes LBT is not a starting position of a slot, the terminal device can send valid information only at a starting position of a slot next to a slot in which LBT is completed.

(3) Cyclic prefix extension (cyclic prefix extension, CPE)

Currently, in an NR-U system, to enable as many NR-U devices as possible to meet symbol-level synchronization, it needs to be considered that an LBT end time point may not be a starting position of a symbol. Therefore, the CPE is used to ensure symbol-level synchronization. The CPE indicates that a cyclic prefix (cyclic prefix, CP) of an OFDM symbol is extended forward by one symbol. Symbol-level synchronization may also be understood as that an NR-U device starts to send information at a starting position of an OFDM symbol (symbol).

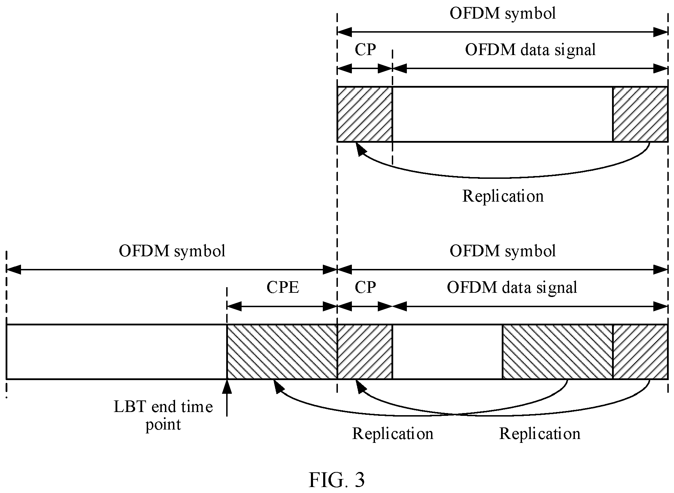

FIG. 3 is a diagram of a structure of CPE replication. As shown in FIG. 3, one OFDM symbol includes a CP and an OFDM data signal, and the CP is obtained by replicating a tail segment of the OFDM data signal and adding the tail segment to a header of the OFDM data signal. If an LBT end time point of an NR-U device is not a start point of an OFDM symbol, the NR-U device cannot send a signal of a complete OFDM symbol. However, according to an LBT mechanism, the NR-U device needs to immediately access a channel after completing LBT. Therefore, a part of a next OFDM symbol is further used as an extended CP and filled in previous incomplete OFDM, to access and occupy the channel. The extended CP is a CPE.

Therefore, because the terminal device in SL-U shares a resource at a granularity of a slot, in a slot before a slot of sharing the resource, the terminal device sharing the resource may reserve, for a terminal device using the shared resource, an OFDM symbol for completing LBT, and complete channel access through CPE sending, so that information can be sent at a starting position of a slot next to a slot in which LBT is completed.

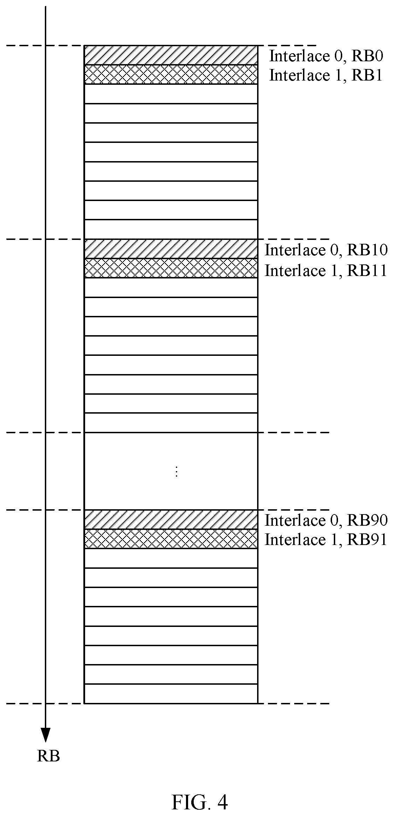

In addition, currently, there is a regulation requirement on an occupied channel bandwidth (occupied channel bandwidth, OCB) in a used unlicensed spectrum, and generally the OCB is at least 80% of a normal bandwidth. For example, if a channel bandwidth is 20 megahertz (megahertz, MHz), at least a bandwidth of 16 MHz needs to be occupied to preempt the 20 MHz channel. Therefore, to ensure an OCB requirement, a concept of an interlace RB (interlace resource block) is introduced into a 3GPP NR-U system, and it is defined that an interlace includes $\{m, M + m, 2M + m, 3M + m, ...\}$ RBs, where $m \in \{0, 1, ..., M - 1\}$. As shown in FIG. 4, for a 15 kHz SCS, there are 10 interlace resources (interlace 0 to interlace 9). For example, an NR-U device 1 may use resources in the interlace 0 (interlace 0), including {RB0, RB10, ..., RB90}, and an NR-U device 2 may use resources in the interlace 1 (interlace 1), including {RB1, RB11, ..., RB91}.

Therefore, the terminal device may alternatively share a time-frequency resource in a COT with another terminal device at a granularity of an interlace (interlace) resource block (resource block, RB).

(4) Sidelink resource selection mode

Before performing LBT, the terminal device needs to perform resource selection. In sidelink communication, there are two resource selection modes: Mode1 (Mode1) and Mode2 (Mode2). Mode1 is a mode based on base station scheduling, and Mode2 is a mode in which a user autonomously selects a resource. The terminal device in SL-U has sensing and resource selection capabilities, and usually implements resource selection in Mode2. Therefore, a process of performing resource selection in Mode2 is described in embodiments of this application. For example, a process in which the terminal device triggers Mode2 in a slot a to perform resource selection includes the following steps.

Step 2-1: The terminal device determines a resource selection window (resource selection window, RSW) $[a + T_1, a + T_2]$, where $0 \leq T_1 \leq T_{proc,1}^{SL}$, and $T_{2min} \leq T_2 \leq$ packet delay budget (packet delay budget, PDB), where $T_{proc,1}^{SL}$ is a delay of processing resource selection and data sending by the terminal device, $T_1$ and $T_2$ depend on implementation of the device and represent a left boundary and a right boundary of the resource selection window, and a value of $T_{proc,1}^{SL}$ is in one-to-one correspondence with a subcarrier spacing $\mu_{SL}$ used for transmission, as shown in Table 3.

Table 3

| $\mu_{SL}$ | $T_{proc,1}^{SL}/T_{proc,0}^{SL}$ (slots) |
|---|---|
| 0 | 1 |
| 1 | 1 |
| 2 | 2 |
| 3 | 4 |

Step 2-2: The terminal device determines a sensing window $[a - T_0, a - T_{proc,0}^{SL})$, where $T_{proc,0}^{SL}$ is a delay of processing a sensing result by the terminal device, $T_0$ represents a left boundary of the sensing window, and a value of $T_{proc,0}^{SL}$ is also in one-to-one correspondence with the subcarrier spacing $\mu_{SL}$ used for transmission, as shown in Table 3.

Step 2-3: The terminal device determines a reference signal received power (reference signal received power, RSRP) threshold, where the RSRP threshold is related to a priority ($prio_{TX}$) of to-be-sent data and a priority ($prio_{RX}$) indicated by received sidelink control information (sidelink control information, SCI), and is specifically an RSRP threshold corresponding to a ($prio_{RX}$ + ($prio_{TX}$ - 1) * 8)th index (index) in an RSRP threshold set configured for a resource pool.

Step 2-4: The terminal device initializes an available resource set $S_A$ as all time-frequency resource elements in a resource selection box, where one time-frequency resource element is one slot and one sub-channel.

Step 2-5: Exclude a time-frequency resource from $S_A$ when the time-frequency resource meets all of the following conditions:

Condition 1-1: A slot, that is, a slot in which the terminal device is in a sending state, is not sensed in the sensing window. Because of a limitation by a half-duplex transceiver, when the terminal device is in the sending state, the terminal device cannot perform receiving. Therefore, the sending slot cannot be sensed.

Condition 1-2: It is assumed that there is SCI sent by another terminal device in the slot, the SCI indicates periodic resource reservation, and the periodic resource reservation corresponds to all sub-channels in a slot in a selection window. A periodic resource reservation value used by the SCI includes periodic reservation values configured for all resource pools.

Step 2-6: If time-frequency resources remained after exclusion from $S_A$ are less than X% of total resources of the resource selection window, and a value of X% is configured for the resource pool, perform step 2-4 again to initialize the resource set, where re-initialized $S_A$ is consistent with previously initialized $S_A$; and then perform step 2-7.

Step 2-7: Exclude a time-frequency resource from $S_A$ when the time-frequency resource meets all of the following conditions:

Condition 2-1: Received first-stage SCI is successfully decoded.

Condition 2-2: An RSRP result of performing RSRP measurement on a physical sidelink shared channel (physical sidelink shared channel, PSSCH) demodulation reference signal (demodulation reference signal, DMRS) included in a PSSCH time-frequency resource that is reserved by the received first-stage SCI and that is used for transmission is greater than the RSRP threshold determined in step 2-3, where the PSSCH time-frequency resource further includes a periodically reserved time-frequency resource, and a time-frequency resource that is reserved by a time resource indicator value (time resource indicator value, TRVI) and a frequency resource indicator value (frequency resource indicator value, FRVI).

Condition 2-3: The time-frequency resource reserved by the received first-stage SCI (including reservation in a plurality of consecutive periodicities, and reservation in the TRVI and the FRVI) is within the resource selection window.

Step 2-8: If the time-frequency resources remained after exclusion from $S_A$ are less than X% of the total resources of the resource selection window, increase the RSRP threshold determined in step 2-3, for example, increase the RSRP threshold by 3 decibels (decibel, dB) each time, until the time-frequency resources remained after exclusion from $S_A$ are greater than or equal to X% of the total resources of the resource selection window.

After performing resource selection based on step 2-1 to step 2-8, the terminal device may notify another terminal device of a reserved resource by using SCI, and the terminal device completes LBT before using the reserved resource, to send data on a specified time-frequency resource.

(5) Resource pool

Currently, for SL communication, a network device may (pre)configure a resource pool for a terminal device. One SL resource pool includes several sub-channels in frequency domain, and a unit in time domain is an SL slot. One sub-channel is formed by one group of a plurality of contiguous physical resource blocks (physical resource block, PRB), the plurality of PRBs may represent a sub-channel size, and a specific value is configured by a higher layer for a resource pool.

A resource pool configured to send information may be referred to as a TX resource pool, and a resource pool configured to receive information may be referred to as an RX resource pool. For a given time, the terminal device can send a physical sidelink control channel (physical sidelink control channel, PSCCH) or a physical sidelink shared channel (physical sidelink shared channel, PSSCH) only in one TX resource pool, but can receive information in a plurality of RX resource pools.

For an unlicensed spectrum resource in a frequency range 1 (frequency range 1, FR1), before sending SL data, the terminal device may perform LBT on each 20 MHz channel, and may perform a channel access process on a plurality of channels. One transmission may be performed on a plurality of channels at the same time. To prevent one 20 MHz LBT channel from appearing in different resource pools, one resource pool configured for the terminal device may include at least one 20 MHz bandwidth channel, and a resource pool of one terminal device may include a plurality of 20 MHz bandwidth channels.

To avoid interference between different channels, the protocol stipulates that the terminal device cannot send data on the entire 20 MHz bandwidth, but reserves some frequency band resources as a guard bandwidth (guard bandwidth) and sends data only on some frequency domain resources other than the guard bandwidth, where the some available frequency domain resources are referred to as a resource block set (RB set). Therefore, when a position and a size of the guard bandwidth are determined, a start RB position and an end RB position of the RB set, and a quantity of RBs in the RB set are also determined accordingly. In addition, when the terminal device performs an LBT operation on a plurality of contiguous 20 MHz channels and successfully accesses a channel, a guard bandwidth between two RB sets may be used for data transmission, thereby improving resource utilization. One 20 MHz channel corresponds to one resource block set (RB set).

In an implementation, as defined in Rel-16, a sub-channel size may be configured as 10, 12, 15, 20, 25, 50, 75, or 100 RBs. The terminal device may determine, based on a resource pool (pre)configuration, whether to use a sub-channel formed by contiguous RBs or a sub-channel formed by alternate RBs for data transmission. For example, assuming that one interlace includes at least 10 RBs, if a sub-channel size configured for a resource pool is 10 RBs, and the resource pool configuration is that interlace transmission is disabled, the terminal device may determine to use a sub-channel formed by 10 contiguous RBs for data transmission; or if the resource pool configuration is that interlace transmission can be used, the terminal device may determine to use a sub-channel formed by 10 alternate RBs for data transmission.

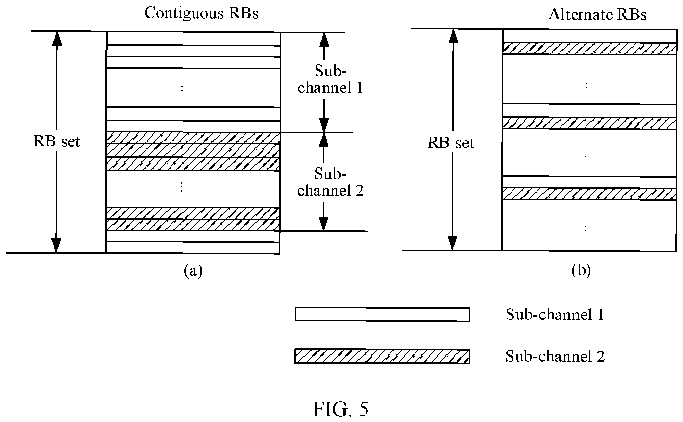

As shown in FIG. 5, an RB set includes a plurality of sub-channels. The sub-channel, for example, a sub-channel 1 and a sub-channel 2 shown in (a) in FIG. 5, may be formed by contiguous RBs. Alternatively, the sub-channel may be an interlace formed by alternate RBs. For example, a sub-channel 1 and a sub-channel 2 shown in (b) in FIG. 5 respectively correspond to an interlace 1 and an interlace 2.

Currently, after performing resource reservation in Mode2 and performing Type1 LBT channel access, the terminal device obtains a COT, and shares a resource in the COT with another terminal device. When the another terminal device performs channel access, terminal devices may congest each other. Consequently, some terminal devices cannot access a channel and send data by using a shared resource, causing a resource waste.

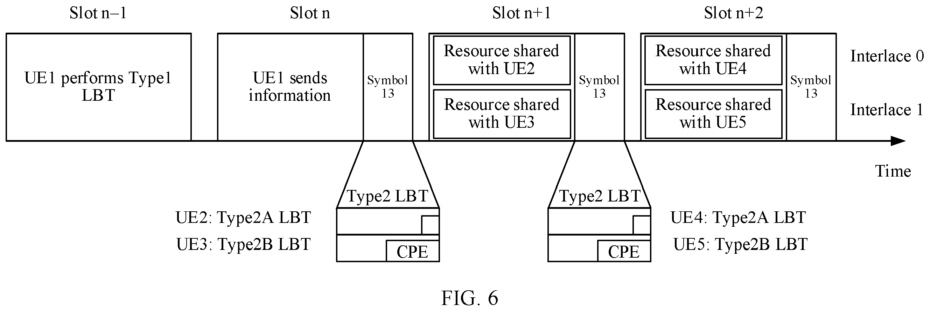

For example, FIG. 6 is a diagram of a scenario in which mutual congestion occurs when UEs perform COT sharing. As shown in FIG. 6, UE1 performs channel access in a slot n-1 in a Type1 LBT manner, and obtains a COT, where the COT includes resources in a slot n to a slot n+2. After accessing a channel, UE1 starts to send information in the slot n, and determines that UE2 and UE3 have reserved resources in a slot n+1. For example, the reserved resource of UE2 is a resource in an interlace 0 of the slot n+1, and the reserved resource of UE3 is a resource in an interlace 1 of the slot n+1, where the interlace 0 and the interlace 1 do not overlap each other in frequency domain.

Then, UE1 sends COT indication information to UE2 and UE3, shares the resource in the slot n+1 with UE2 and UE3, indicates UE2 and UE3 to send information by using the resource in the slot n+1, and reserves a last OFDM symbol (symbol#13) in the slot n for UE2 and UE3 to perform channel access. UE2 and UE3 immediately perform channel access when detecting, in the slot n, that a channel is idle. However, both UE2 and UE3 use Type2 LBT, and a manner of Type2 is not limited. Different Type2 LBT channel access has different durations. For example, UE2 accesses a channel in a Type2A LBT manner, and UE3 accesses a channel in a Type2B LBT manner. Because an execution time of Type2B LBT is short, and after completing LBT, UE3 sends a CPE to occupy a channel, to prevent another terminal device or a device of another system from obtaining a channel resource, UE2 fails in Type2A LBT, and consequently UE2 cannot access the channel to use a shared resource. Similarly, for UE4 and UE5 that have a reserved resource in the slot n+2, a same problem exists as that for UE2 and UE3.

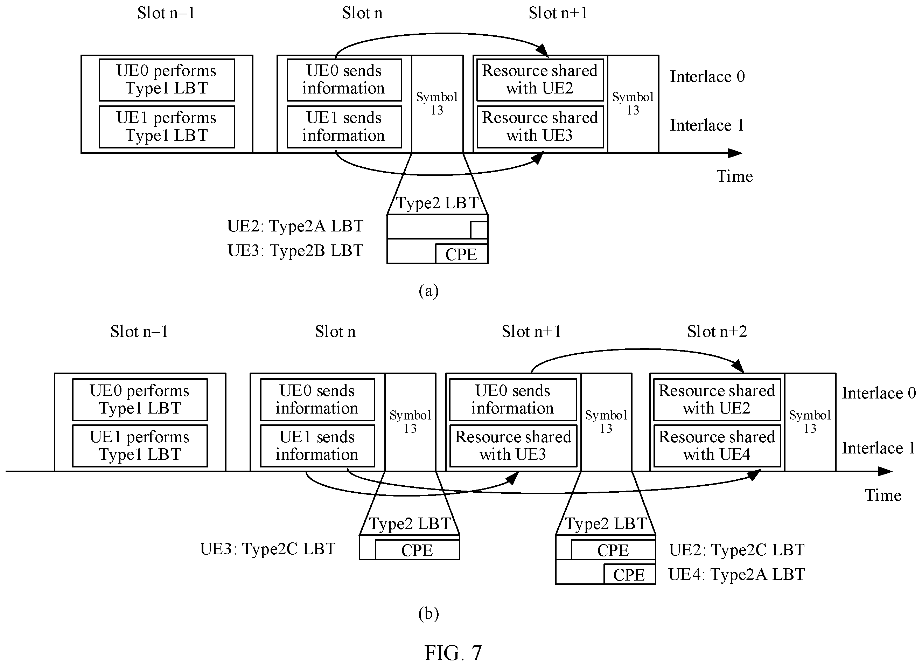

For another example, FIG. 7 is another diagram of a scenario in which mutual congestion occurs when UEs perform COT sharing. A difference from the scenario shown in FIG. 6 is that, in FIG. 6, one UE shares a resource in a COT with a plurality of UEs, while in a scenario shown in FIG. 7, different UEs share resources in a COT with different UEs.

As shown in (a) in FIG. 7, after performing channel access in a Type1 LBT manner in a slot n-1, both UE0 and UE1 access a same channel, and obtain different interlace resources in a same COT. For example, UE0 uses an interlace 0 in the COT, and UE1 uses an interlace 1 in the COT. After accessing the channel, UE0 and UE1 send information in a slot n, separately send COT indication information to UE2 and UE3, share resources in a slot n+1 with UE2 and UE3, and reserve a last OFDM symbol (symbol#13) in the slot n for UE2 and UE3 to perform channel access. UE2 and UE3 immediately perform channel access when detecting, in the slot n, that a channel is idle. Similar to the foregoing description, a manner of Type2 used by UE2 and UE3 using the shared resources is not limited, and UE2 and UE3 cannot learn of channel access manners used by each other. When UE2 and UE3 use different Type2 LBT for access, for example, UE2 uses a Type2A LBT manner for channel access, and UE3 uses a Type2B LBT manner for channel access, after completing LBT, UE3 sends a CPE to occupy a channel. As a result, UE2 fails in Type2A LBT, and consequently UE2 cannot access the channel to use the shared resource

As shown in (b) in FIG. 7, a difference from the scenario shown in (a) in FIG. 7 is that different UEs share resources at different time domain positions.

As shown in (b) in FIG. 7, after performing channel access in a Type1 LBT manner in a slot n-1, both UE0 and UE1 access a same channel, and obtain different interlace resources in a same COT. For example, UE0 uses an interlace 0 in the COT, UE1 uses an interlace 1 in the COT, and UE0 and UE1 send information in a slot n after accessing the channel. For UE1, UE1 shares the interlace 1 in a slot n+1 with UE3, and shares a slot n+2 with UE4, and UE0 continues to send information by using a resource in the slot n+1, and shares a resource in the slot n+2 with UE2.

For UE3, UE1 sends COT indication information to UE3, and reserves a last OFDM symbol (symbol#13) in n for UE3 to perform channel access, and UE3 may perform channel access by using any Type2 LBT. For UE2 and UE4, UE0 and UE1 also send COT indication information to UE2 and UE4, and reserve a last OFDM symbol (symbol#13) in n+1 for UE2 and UE4 to perform channel access, and UE2 and UE4 immediately perform channel access when detecting, in the slot n+1, that a channel is idle. Similar to the foregoing description, a manner of Type2 used by UE2 and UE4 using the shared resources is not limited. In addition, UE2 may directly send a CPE within 16 μs by using Type2C LBT, and UE4 needs to perform channel listening for a period of time and then send a CPE by using Type2A LBT. In this case, the CPE that is sent by UE2 in advance congests the Type2A channel access process performed by UE4. As a result, UE4 fails in Type2A LBT, and consequently UE2 cannot access a channel to use a shared resource.

Therefore, an embodiment of this application provides a communication method, to resolve a problem that a resource waste is caused because a terminal device using a shared resource cannot access a channel.

The following describes technical solutions of this application with reference to accompanying drawings.

The technical solutions in embodiments of this application may be applied to systems supporting sidelink communication, and support a communication scenario with network coverage and a communication scenario without network coverage. For example, the systems are a wireless fidelity (wireless fidelity, Wi-Fi) system, a vehicle to everything (vehicle to everything, V2X) communication system, a device-to-device (device-to-device, D2D) communication system, an internet of vehicles communication system, a 4th generation (4th generation, 4G) mobile communication system such as a long term evolution (long term evolution, LTE) system or a worldwide interoperability for microwave access (worldwide interoperability for microwave access, WiMAX) communication system, a 5th generation (5th generation, 5G) mobile communication system such as a new radio (new radio, NR) system, and a future communication system such as a 6th generation (6th generation, 6G) mobile communication system.

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used.

In addition, in embodiments of this application, words such as "example" or "for example" are used to indicate an example, an instance, or descriptions. Any embodiment or design scheme described as an "example" in this application should not be explained as being more preferred or having more advantages than another embodiment or design scheme. Exactly, use of the word "example" is intended to present a concept in a specific manner.

In embodiments of this application, terms "information (information)", "signal (signal)", "message (message)", "channel (channel)", and "signaling (signaling)" may sometimes be interchangeably used. It should be noted that meanings expressed by the terms are consistent when differences of the terms are not emphasized.

A network architecture and a service scenario described in embodiments of this application are intended to describe the technical solutions in embodiments of this application more clearly, and do not constitute a limitation on the technical solutions provided in embodiments of this application. A person of ordinary skill in the art may learn that, with the evolution of the network architecture and the emergence of new service scenarios, the technical solutions provided in embodiments of this application are also applicable to similar technical problems.

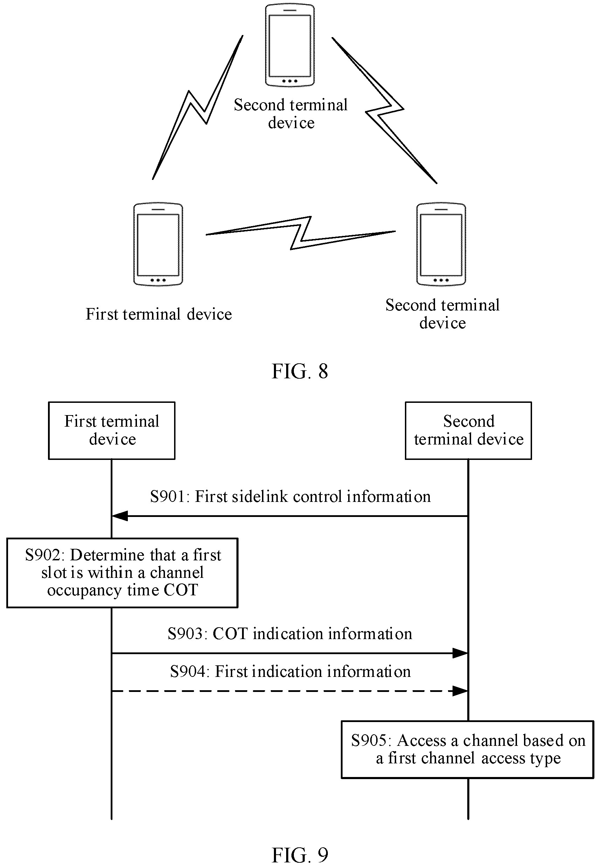

For example, FIG. 8 is a diagram of an architecture of a communication system according to an embodiment of this application. As shown in FIG. 8, the communication system includes a first terminal device and at least one second terminal device. The first terminal device communicates with the second terminal device through a sidelink, and the second terminal devices also communicate with each other through a sidelink. FIG. 8 shows an example of one first terminal device and two second terminal devices. A quantity of first terminal devices and a quantity of second terminal devices are not limited in embodiments of this application.

In this embodiment of this application, the provided communication method is described by using an example in which the first terminal device is a terminal device that shares a resource and the second terminal device is a terminal device that uses the shared resource of the first terminal device.

The first terminal device and the second terminal device may be located in a same network coverage area, or may be located in different network coverage areas; or only one terminal device is located in a network coverage area; or neither the first terminal device nor the second terminal device is located in a network coverage area.

In a scenario in which at least one of the first terminal device and the second terminal device is located in a network coverage area, the terminal device located in the network coverage area may select, in a mode based on base station scheduling (Mode1), a licensed resource or a licensed frequency band used for sidelink communication, or may select, from a resource pool in a mode in which a user autonomously selects a resource (Mode2), an unlicensed resource or an unlicensed frequency band used for sidelink communication. In a scenario in which neither the first terminal device nor the second terminal device is located in a network coverage area, the first terminal device and the second terminal device may select, from a resource pool in a mode in which a user autonomously selects a resource (Mode2), an unlicensed resource or an unlicensed frequency band used for sidelink communication.

It may be understood that the resource in embodiments of this application is a time-frequency resource, and an unlicensed frequency band, a licensed frequency band, and/or a dedicated frequency band may be used for sidelink communication.

Optionally, the communication system further includes a third terminal device and a fourth terminal device (not shown in FIG. 8). The fourth terminal device is a terminal device that accesses a same channel as the first terminal device and obtains different resources in a same COT, and the third terminal device is a terminal device that accesses a channel by using a preconfigured first channel access type and sends sidelink information by using a shared resource of the fourth terminal device. In other words, when different terminal devices share different resources in a same COT with different terminal devices, a terminal device that uses a shared resource may access a channel by using the preconfigured first channel access type. For a specific implementation process of the solution, refer to the following method embodiments. Details are not described herein.

The terminal device is a terminal that accesses the communication system and that has a wireless transceiver function or a chip or a chip system that can be disposed in the terminal. The terminal device may also be referred to as a user apparatus, an access terminal, a subscriber unit, a subscriber station, a mobile station, a mobile console, a remote station, a remote terminal, a mobile device, a user terminal, a terminal, a wireless communication device, a user agent, or a user apparatus. The terminal device in embodiments of this application may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, an RSU having a terminal function, or the like. The terminal device in this application may alternatively be an in-vehicle module, an in-vehicle assembly, an in-vehicle component, an in-vehicle chip, or an in-vehicle unit that is built in a vehicle as one or more components or units. The vehicle may implement the communication method in this application by using the in-vehicle module, the in-vehicle assembly, the in-vehicle component, the in-vehicle chip, or the in-vehicle unit that is built in the vehicle.

It should be noted that the communication method provided in embodiments of this application is applicable to the first terminal device and the second terminal device shown in FIG. 8. For a specific implementation, refer to the following method embodiments. Details are not described herein.

It should be understood that the devices or function nodes included in the communication system shown in FIG. 8 are merely described as examples, and constitute no limitation on embodiments of this application. Actually, the communication system shown in FIG. 8 may further include another network element, device, or function node that has an interaction relationship with the device or function node shown in the figure. This is not specifically limited herein.

It should be noted that the solutions in embodiments of this application may also be used in another communication system, and a corresponding name may also be replaced with a name of a corresponding function in the another communication system.

It should be understood that FIG. 8 is merely a simplified diagram of an example for ease of understanding. The communication system may further include another network device and/or another terminal device that are/is not shown in FIG. 8.

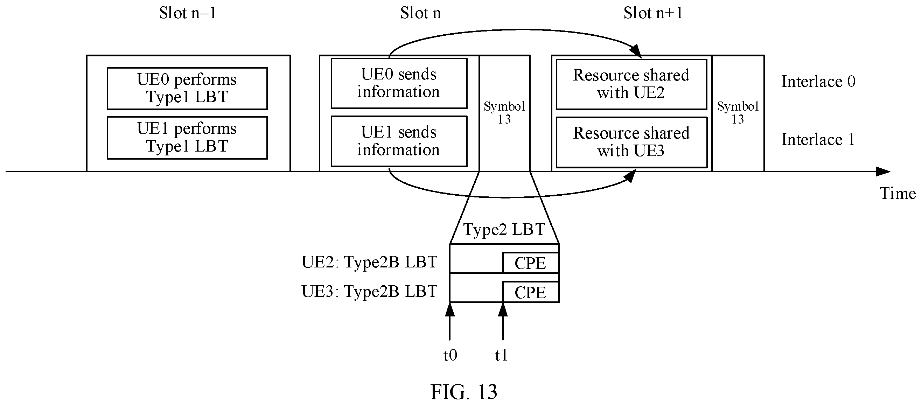

The following specifically describes communication methods provided in embodiments of this application with reference to FIG. 9 and FIG. 13.

For example, FIG. 9 is a schematic flowchart of a communication method according to an embodiment of this application. The communication method is applicable to the communication system shown in FIG. 8.

As shown in FIG. 9, the communication method includes the following steps.

S901: A second terminal device sends first sidelink control information to a first terminal device. Correspondingly, the first terminal device receives the first sidelink control information from the second terminal device.

The first sidelink control information indicates a first slot, and the first slot is used by the second terminal device to send sidelink information. The first slot is a slot in which the second terminal device has a reserved resource, and the first slot may be one or more slots. For a process in which the second terminal device performs resource reservation, refer to the related descriptions in step 2-1 to step 2-8. Details are not described herein again. In addition, the first sidelink control information may further indicate a priority of transmitting data by the second terminal device in the first slot.

For example, before performing Type1 LBT, for example, in a channel listening process, the first terminal device may receive sidelink control information from a plurality of terminal devices, where the sidelink control information of the plurality of terminal devices includes first sidelink control information of one or more second terminal devices. When a plurality of second terminal devices have reserved resources in the first slot, the reserved resources of the plurality of second terminal devices in the first slot do not overlap each other. For example, different interlace resources in the first slot are reserved. It may be understood that the reserved resources are frequency domain resources in the first slot.

S902: The first terminal device determines that the first slot is within a COT.

For example, after completing Type1 LBT, the first terminal device accesses a channel, obtains a COT for sending information on the channel, and determines, based on the COT, that the first slot is within the COT, where a priority of transmitting data by the second terminal device in the first slot is higher than a priority of transmitting data by the first terminal device in the first slot, so that the first terminal device can share a resource in the first slot with the second terminal device.

It should be noted that the COT obtained by the first terminal device may include all frequency domain resources in the COT, or may include some frequency domain resources in the COT. Channel resources obtained in different scenarios are different. This is not specifically limited in embodiments of this application.

In addition, after determining to share a resource with the second terminal device, the first terminal device may further reserve a last symbol in a slot before the first slot for the second terminal device to perform channel access, so that the second terminal device can start to send information at a starting position of the first slot.

S903: The first terminal device sends COT indication information to the second terminal device. Correspondingly, the second terminal device receives the COT indication information from the first terminal device.

The COT indication information indicates information about a resource shared with the second terminal device, for example, indicates that the second terminal device can send information in the first slot, and/or indicates a frequency domain resource shared with the second terminal device in the first slot. This is not limited in embodiments of this application.

In a possible design solution, the COT indication information may be sidelink control information.

It may be understood that the COT indication information is sent before the second terminal device performs channel access. When a plurality of second terminal devices have reserved resources in the first slot, the COT indication information varies depending on different resources reserved by different second terminal devices in the first slot. In addition, to indicate the second terminal device to perform channel access on a reserved symbol, the first terminal device releases a channel at a starting position of the reserved symbol to be idle, so that the second terminal device immediately performs LBT when detecting, through listening, that the channel is idle.

S904: The first terminal device sends first indication information to the second terminal device. Correspondingly, the second terminal device receives the first indication information from the first terminal device.

The first indication information may indicate at least one second terminal device to access a channel by using a first channel access type. In other words, the first indication information may indicate the first channel access type.

In a possible design solution, the first indication information may indicate second terminal devices that send information in a same slot to access a channel by using the first channel access type. In another possible design solution, the first indication information may indicate a second terminal device using a shared resource to access a channel by using the first channel access type.

The first channel access type may be any one of Type2A LBT, Type2B LBT, or Type2C LBT. This is not specifically limited in embodiments of this application.

It may be understood that one or more second terminal devices that send information by using the first slot may complete channel access based on the first indication information by using a same channel access type. The first indication information is sent before the second terminal device performs channel access, and the first indication information sent to a plurality of second terminal devices indicates a same channel access type.

In a possible design solution, the first indication information may be carried in second sidelink control information or media access control (media access control, MAC) signaling for sending. For example, the first indication information may be carried in the second sidelink control information or the MAC signaling in a form of a field, and the field may be an extension field.

When the second sidelink control information may include first-phase sidelink control information and second-phase sidelink control information, the first indication information may be carried in the first-phase sidelink control information, or may be carried in the second-phase sidelink control information.

In another possible design solution, the first indication information may be carried in the COT indication information in S903, and the COT indication information is carried in the second sidelink control information or the media access control MAC signaling for sending. It may be understood that the first indication information is a field in the COT indication information.

In still another possible design solution, the first indication information may be the COT indication information in S903. In this case, the COT indication information may further indicate the first channel access type, and S904 does not need to be performed.

In a possible design solution, the first indication information may be indicated by a first bit field, and different bit values of the first bit field indicate any two of the following first channel access types: Type2A LBT, Type2B LBT, or Type2C LBT. The first bit field is one or more bits.

For example, the first indication information is indicated by a bit value of one bit, and different bit values of the one bit indicate any two of the following first channel access types: Type2A LBT, Type2B LBT, or Type2C LBT. For example, "0" indicates Type2A LBT, and "1" indicates Type2B LBT. For another example, "0" indicates Type2B LBT, and "1" indicates Type2C LBT.

For another example, the first indication information is indicated by bit values of a plurality of bits, and different bit values of the plurality of bits indicate any three of the following first channel access types: Type2A LBT, Type2B LBT, or Type2C LBT. For example, the first indication information is indicated by bit values of two bits, to be specific, "00" indicates Type2A LBT, "01" indicates Type2B LBT, and "10" indicates Type2C LBT. For another example, the first indication information is indicated by bit values of three bits, to be specific, "000" indicates Type2A LBT, "001" indicates Type2B LBT, and "010" indicates Type2C LBT. Access types corresponding to different bit values are not limited in embodiments of this application.

It should be noted that the first terminal device may indicate different access types for terminal devices that send sidelink information by using different slots, but first channel access types indicated by terminal devices that send sidelink information by using a same slot are the same.

It may be understood that S904 is an optional step. For example, when the second terminal device performs channel access based on a preconfigured first channel access type or the first indication information is the COT indication information, S904 may not be performed.

S905: The second terminal device accesses the channel based on the first channel access type.

The first channel access type may be indicated by the first indication information or may be preconfigured. For example, the first channel access type is preconfigured, the first channel access type may be configured to be used for a plurality of terminal devices, the plurality of terminal devices may be understood as terminal devices that can use a shared resource, and the second terminal device is one of the plurality of terminal devices. In other words, for a terminal device that can use a shared resource, a same first channel access type may be configured for a plurality of terminal devices in a resource pool in a configuration/preconfiguration manner.

When the first channel access type is indicated by the first indication information, after detecting, through listening, that a channel is idle, the second terminal device may perform channel access on a reserved symbol based on the first channel access type indicated by the received first indication information, and after completing channel access based on the first channel access type, send a first CPE to occupy the channel, so as to send information in the first slot. All of a plurality of second terminal devices receive the first indication information, and after detecting, through listening, that a channel is idle, the plurality of second terminal devices may simultaneously perform channel access on a reserved symbol through LBT of a same channel access type, and simultaneously send CPEs of a same length to occupy the channel.

When the first channel access type is preconfigured, after obtaining indication information (for example, the COT indication information) indicating that a shared resource can be used, the second terminal device performs idle channel detection, after detecting, through listening, that a channel is idle, performs channel access on a reserved symbol by using the preconfigured first channel access type, and after completing channel access based on the first channel access type, sends a CPE to occupy the channel, so as to send information in the first slot. It may be understood that, in this case, S904 may not be performed. In other words, for a plurality of second terminal devices, preconfigured channel access manners are the same. Therefore, after detecting, through listening, that a channel is idle, the plurality of second terminal devices may alternatively simultaneously perform channel access on a reserved symbol through LBT of a same preconfigured channel access type, and simultaneously send CPEs of a same length to occupy the channel.

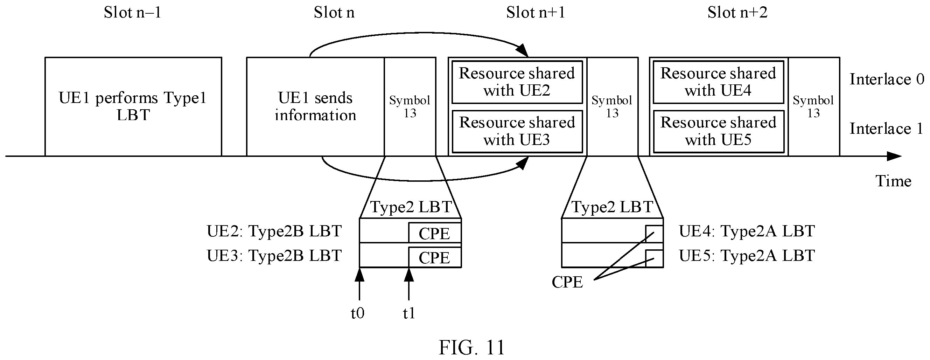

When the first channel access type is configured for a plurality of terminal devices, the plurality of terminal devices further include a third terminal device. A difference between the third terminal device and the second terminal device is that the third terminal device has a reserved resource in a COT obtained by a fourth terminal device, and the reserved resource is also in the first slot. It may be understood that the reserved resources of the third terminal device and the second terminal device in the first slot do not overlap in frequency domain. The fourth terminal device and the first terminal device access a same channel, and the fourth terminal device and the first terminal device obtain different resources in a same COT. For example, the first terminal device and the fourth terminal device obtain different interlace resources in the same COT. Correspondingly, the fourth terminal device shares the reserved resource of the third terminal device with the third terminal device. For a specific process, refer to the related descriptions in S902. After detecting, through listening, that a channel is idle, the third terminal device also performs channel access on a same reserved symbol by using the preconfigured first channel access type, simultaneously accesses the channel with the second terminal device, and sends information on different resources in the first slot. For a specific implementation process, refer to the following method embodiment shown in FIG. 11. Details are not described herein.

In this embodiment of this application, interaction between the first terminal device and one second terminal is used as an example for description. Certainly, the first terminal device may interact with a plurality of second terminal devices. For a procedure in which each second terminal device interacts with the first terminal device, refer to this embodiment of this application. This is not specifically limited in embodiments of this application.

Based on the communication method shown in FIG. 9, for a second terminal device using a shared resource, the second terminal device may perform channel access by using a preconfigured fixed channel access manner or based on a channel access type indicated by the first indication information sent by the first terminal device. This can ensure that the second terminal device can perform LBT channel access at a specified moment in a channel access manner of a specified type regardless of whether collision access exists, can avoid a problem that a terminal device that completes channel access later cannot access a channel and cannot use a shared resource because terminal devices using shared resources use different channel access manners, and can enable a terminal device that transmits a high-priority service on a reserved resource to successfully use a shared resource, thereby ensuring QoS of a high-priority service, improving resource utilization, and avoiding a resource waste.

The following describes in detail the communication method provided in this embodiment of this application with reference to a specific application scenario. The communication method provided in this embodiment of this application may be applied to the communication scenario shown in FIG. 6. An example in which UE1 is the first terminal device, UE2 and UE3 are the second terminal devices, the COT includes the slot n to the slot n+2, and the first slot is the slot n+1 is used for description.

For ease of description, in the following embodiments, SCI sent by UE2 is referred to as SCI1, and SCI sent by UE3 is referred to as SCI2.

It should be noted that, in the communication method shown in FIG. 9, the first indication information indicates a channel access type used by the at least one second terminal device. In another communication method, the first indication information may indicate a CPE length. Therefore, the at least one second terminal device performs channel access. Details are described below.

The first terminal device sends the first indication information to the at least one second terminal device. Correspondingly, the first indication information indicates a length of a first CPE of the at least one second terminal device.

In an optional manner, the length of the first CPE corresponds to the first channel access type. The second terminal device determines the first channel access type based on the length of the first CPE for execution. In this manner, it may be understood that the length of the first CPE is an execution time of the first channel access type, or the length of the first CPE is used by the second terminal device to determine an execution time of channel access.

Optionally, the first indication information may directly indicate the CPE length, or the first indication information may indicate an index value corresponding to the CPE length. The index value corresponds to the CPE length. For example, different index values correspond to different CPE lengths. The CPE length may be a preset value. For example, CPE lengths may be 71 $\mu$s, 55 $\mu$s, and 46 $\mu$s, and the three different CPE lengths respectively correspond to different index values 0, 1, and 2. Alternatively, the CPE length may be a fixed time length minus a corresponding preset duration, and different preset durations form different CPE lengths. For example, the fixed time length is 71 $\mu$s, the subtracted preset durations may be 16 $\mu$s, 25 $\mu$s, and 34 $\mu$s, and differences between the fixed time length and the three different preset durations correspond to different index values 0, 1, and 2.

The correspondence between a CPE length and an index value may be stored in the terminal device in a form of a table. The first terminal device may select a corresponding CPE length from the table based on the first channel access type as the length of the first CPE, and the first indication information indicates an index value corresponding to the first CPE, so that the second terminal device can further determine the CPE length based on the index value, to determine the channel access type. It may be understood that the correspondence between a CPE length and an index value may be preconfigured in the terminal device.

For example, the CPE length may be calculated according to the following formula: $T_{cpe}=T_{symbol}-\Delta_i$. $T_{symbol}$ represents a duration (that is, a fixed time length) of one symbol corresponding to a subcarrier spacing of 15 kHz, and $\Delta_i$ represents a preset duration. A correspondence between a preset duration and a duration index is shown in Table 4. Different values of the preset duration correspond to different CPE lengths.

In a possible design solution, the first indication information may indicate a CPE duration index. Different duration indexes correspond to different $\Delta_i$, so that different CPE durations can be calculated. This table may be preconfigured in a resource pool of the terminal device.

In another possible design solution, the first indication information may directly indicate a CPE length, that is, $T_{cpe}=T_{symbol}-\Delta_i$, and a plurality of CPE lengths may be configured in the terminal device based on $\Delta_i$.

Table 4

| Duration index ($i$) | Preset duration $\Delta_i$ (s) |
|---|---|
| 0 | $16 \cdot 10^{-6}$ |
| 1 | $25 \cdot 10^{-6}$ |
| 2 | $34 \cdot 10^{-6}$ |
| 3 | $43 \cdot 10^{-6}$ |
| 4 | $52 \cdot 10^{-6}$ |
| 5 | $61 \cdot 10^{-6}$ |
| 6 | $T_{symbol}$ |

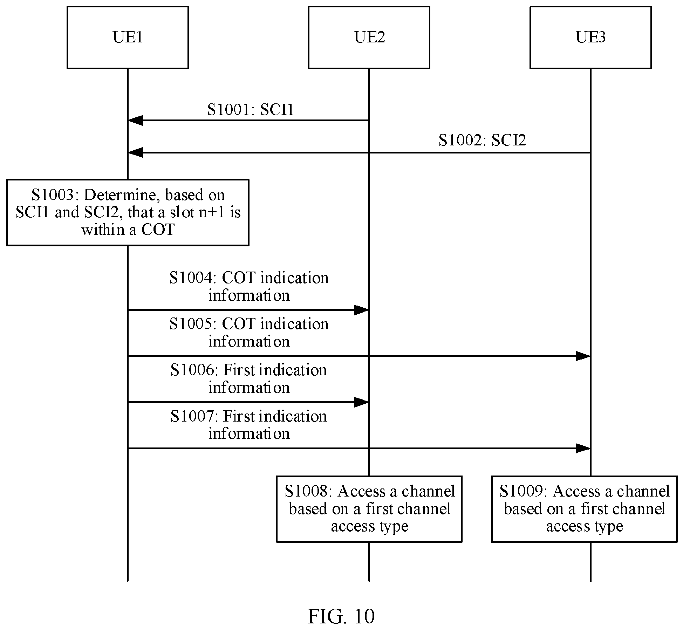

For example, FIG. 10 is a schematic flowchart of another communication method according to an embodiment of this application. The communication method includes the following steps.

S1001: UE2 sends SCI1 to UE1. Correspondingly, UE1 receives SCI1 from UE2.

For example, as shown in FIG. 11, UE1 performs Type1 LBT in a slot n-1, and before the slot n-1, UE1 may obtain SCI of UE2, that is, SCI1, in a channel listening process. SCI1 indicates a slot n+1, and the slot n+1 is used by UE2 to send information. In other words, UE2 has a reserved resource in the slot n+1.

S1002: UE3 sends SCI2 to UE1. Correspondingly, UE1 receives SCI2 from UE3.

For a specific implementation process of S1002, refer to the related descriptions in S1001. SCI2 indicates the slot n+1, and the slot n+1 is used by UE3 to send data. In other words, UE3 also has a reserved resource in the slot n+1. It may be understood that the reserved resource of UE3 does not overlap the reserved resource of UE2. For example, UE2 reserves an interlace 0 in the slot n+1, and UE3 reserves an interlace 1 in the slot n+1, where the interlace 0 and the interlace 1 are frequency domain resources that do not overlap each other.

It may be understood that SCI1 further indicates a priority of transmitting data by UE2 on the reserved resource, and SCI2 also further indicates a priority of transmitting data by UE3 on the reserved resource.

It may be understood that the UE 1 may further obtain SCI of another UE in the channel listening process.

It should be noted that a sequence of performing S1001 and S1002 is not specifically limited in this embodiment of this application.

S1003: UE1 determines, based on SCI1 and SCI2, that the slot n+1 is within a COT.

For example, after detecting, through listening, that a channel is idle, UE1 performs Type1 LBT in the slot n-1 to complete channel access, obtains a COT including a slot n to a slot n+2, to send information in the slot n, determines, based on information indicated by SCI1 and SCI2, that a slot (the slot n+1) for reserving the resources by UE2 and UE3 is within the obtained COT, and determines that the priority of transmitting data by UE2 on the reserved resource is higher than a priority of transmitting data by UE1 on a reserved resource, and the priority of transmitting data by UE3 on the reserved resource is higher than the priority of transmitting data by UE1 on the reserved resource.

S1004: UE1 sends COT indication information to UE2. Correspondingly, UE2 receives the COT indication information from UE1.

For example, it is determined to share a reserved resource in the slot n-1 with UE2, so as to send the COT indication information to UE2. The COT indication information may indicate that UE2 may send information in the slot n+1, and may indicate information about a resource that can be used in the slot n+1. The COT indication information may be carried in SCI or MAC signaling for sending.

S1005: UE1 sends COT indication information to UE3. Correspondingly, UE3 receives the COT indication information from UE1.

It may be understood that the COT indication information in S1005 is the same as that in S1006, may also indicate that UE3 may send information in the slot n+1, and may indicate shared resource information of different UEs by using different fields. In other words, after determining that the slot n+1 is within the COT, and the priorities of transmitting data by UE2 and UE3 on the reserved resources are higher than the priority of transmitting data by UE1 on the reserved resource, UE1 may notify UE2 and UE3 in a broadcast manner.

In addition, after determining a shared resource, UE1 may further reserve a last symbol in the slot n, for example, a symbol 13 in the slot n shown in FIG. 11, for UE2 and UE3 to perform channel access.

S1006: UE1 sends first indication information to UE2. Correspondingly, UE2 receives the first indication information from UE1.

The first indication information indicates that UEs that send information in a same slot use a first channel access type. It should be noted that, for UEs that use resources in different slots, indicated channel access types may be different, but for UEs that use resources in a same slot, indicated channel access types need to be the same. As shown in FIG. 11, a UE that sends information by using a resource in the slot n+1 uses a first channel access type Type2B LBT, and a UE that sends information by using a resource in the slot n+2 uses a first channel access type Type2ALBT.

In a possible design solution, the first indication information indicates a length of a first CPE used after the UE completes channel access. UE2 may determine the first channel access type based on the length of the first CPE indicated by the first indication information. Different first channel access types correspond to different lengths of the first CPE.

A UE that sends information by using a shared resource usually accesses a channel by using Type2 LBT. Therefore, the first channel access type may be any one of Type2A LBT, Type2B LBT, or Type2C LBT. For example, the first channel access type is Type2B LBT.

For example, UE1 sends the first indication information to UE2 before the symbol 13 in the slot n, that is, before UE2 and UE3 perform channel access. The first indication information may be carried in the COT indication information and then carried in SCI or MAC CE signaling for sending, or may be directly carried in SCI or MAC CE signaling for sending. This is not limited in this embodiment of this application.

S1007: UE1 sends first indication information to UE3. Correspondingly, UE3 receives the first indication information from UE1.

For a specific implementation process of S1005, refer to S1004. Details are not described herein again.

It may be understood that UE1 may indicate, by using common SCI, UE2 and UE3 to perform channel access by using the first channel access type.

S1008: UE2 accesses a channel based on the first channel access type.

For example, UE2 obtains the shared resource information and the first indication information, and detects, through listening in the slot n, whether the channel is idle. To ensure that UE2 starts to send information at a starting position of the slot n+1, UE1 releases the channel before the last symbol reserved in the slot n. Therefore, after detecting that the channel is idle, UE2 can perform channel access by using the first channel access type (for example, Type2B LBT) on the last symbol reserved in the slot n, and after completing LBT, send a CPE to occupy the channel, so as to send information by using the shared resource (for example, the interlace 0) at the starting position of the slot n+1.

S1009: UE3 accesses a channel based on the first channel access type.

As shown in FIG. 11, after detecting that the channel is idle, UE3 simultaneously performs channel access by using the first channel access type (for example, Type2B LBT) on the last symbol reserved in the slot n, and sends CPEs of a same length to simultaneously occupy the channel with UE2, to complete channel access. This ensures that UE2 and UE3 each access the channel, and send information by using different interlace resources in the slot n+1.

It may be understood that S1004 and S1005 are simultaneously performed, S1006 and S1007 are simultaneously performed, and S1008 and S1009 are simultaneously performed.

Based on the communication method shown in FIG. 10, when one UE shares resources in a same slot with a plurality of UEs, the UE sharing the resources may indicate the UEs using the shared resources to perform channel access in a same Type2 channel access manner, so that the plurality of UEs can simultaneously perform LBT and simultaneously send a CPE to occupy a channel. This can avoid a problem that channel access by another UE using a shared resource is congested because a UE that ends earlier in LBT sends a CPE to occupy a channel because different channel access types cause different LBT end moments, and can further ensure that resource sharing does not cause a resource waste due to an LBT failure.

The communication method provided in this embodiment of this application may alternatively be applied to the communication scenario shown in (a) in FIG. 7. An example in which UE0 is the fourth terminal device, UE1 is the first terminal device, UE2 is the second terminal device, UE3 is the third terminal device, the COT includes the slot n and the slot n+1, and the first slot is the slot n+1 is used for description.

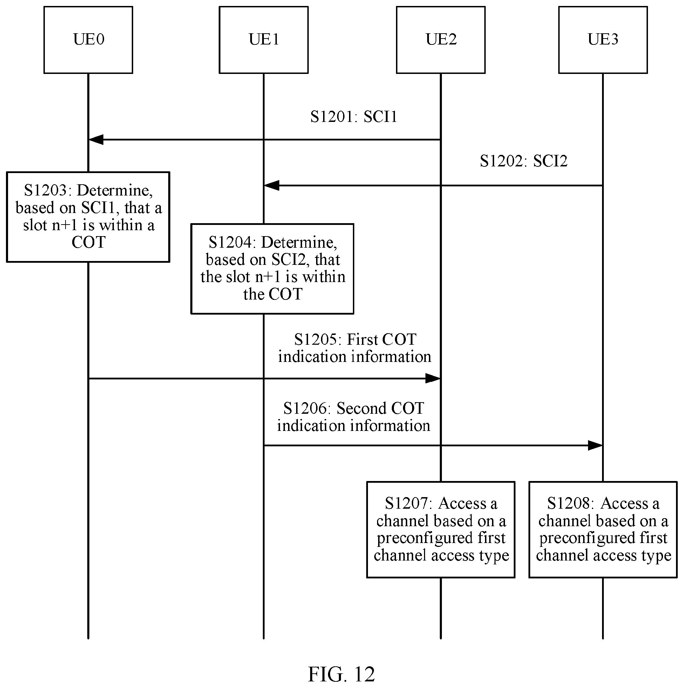

For example, FIG. 12 is a schematic flowchart of still another communication method according to an embodiment of this application. The communication method includes the following steps.

S1201: UE2 sends SCI to UE0. Correspondingly, UE0 receives SCI1 from UE2.

As shown in FIG. 13, UE0 performs Type1 LBT in a slot n-1, and obtains a resource in an interlace 0 in a COT. In a channel listening process before the slot n-1, UE0 may obtain SCI of UE2, that is, SCI1. SCI1 indicates a slot n+1, and the slot n+1 is used by UE2 to send information. SCI1 indicates resource reservation information of UE2. For example, UE2 reserves the resource in the interlace 0 in the slot n+1.

S1202: UE3 sends SCI2 to UE1. Correspondingly, UE1 receives SCI2 from UE3.

As shown in FIG. 13, UE1 also performs Type1 LBT in the slot n-1, accesses a same channel as UE0, and obtains a resource in an interlace 1 in the COT. In a channel listening process before the slot n-1, UE1 may obtain SCI of UE3, that is, SCI2. SCI2 indicates a slot n+1, and the slot n+1 is used by UE3 to send information. SCI2 indicates resource reservation information of UE3. For example, UE3 reserves the resource in the interlace 1 in the slot n+1.

It may be understood that, in a channel listening process, UE0 and UE1 may also obtain SCI of another UE. For example, UE0 may obtain SCI2, and UE1 may obtain SCI1.

S1203: UE0 determines, based on SCI1, that the slot n+1 is within a COT.

As shown in FIG. 13, after performing Type1 LBT in the slot n-1, UE0 accesses a channel, and UE0 obtains the resource in the interlace 0 in the COT, to send information in the interlace 0 in the slot n. In addition, UE0 determines, based on reserved resource information indicated by received SCI1, whether there is a reserved resource in the obtained COT. For example, the COT includes the slot n to the slot n+1, and a reserved resource of UE2 is in the slot n+1. In this case, UE0 may determine that the reserved resource of UE2 is in the COT, and the reserved resource is the resource in the interlace 0 of UE0.

In addition, UE0 further determines, based on transmission priority information indicated by SCI1, that a priority of transmitting data by UE2 on the reserved resource is higher than a priority of transmitting data by UE0 on a reserved resource, and reserves a last symbol in the slot n for UE2, for example, a symbol 13 in the slot n shown in FIG. 13, for UE2 to perform channel access.

S1204: UE1 determines, based on SCI2, that the slot n+1 is within the COT.

For example, after performing Type1 LBT in the slot n-1, UE1 accesses a same channel as UE0, and obtains resources in different interlaces in a same COT. For example, UE1 obtains the resource in the interlace 1 in the COT, to send information in the interlace 1 in the slot n. In addition, UE1 may determine, based on reserved resource information indicated by received SCI2, whether there is a reserved resource in the obtained COT. For example, the COT includes the slot n to the slot n+1, and a reserved resource of UE3 is in the slot n+1. In this case, UE1 may determine that the reserved resource of UE3 is in the COT, and the reserved resource of UE3 is the resource in the interlace 1 of UE1.

In addition, UE1 also determines, based on transmission priority information indicated by SCI2, that a priority of transmitting data by UE3 on the reserved resource is higher than the priority of transmitting data by UE1 on the reserved resource, and reserves a last symbol in the slot n for UE3, for example, the symbol 13 in the slot n shown in FIG. 13, for UE3 to perform channel access. In other words, UE0 and UE1 reserve a same symbol in the slot n for UE2 and UE3 to perform channel access.

S1205: UE0 sends first COT indication information to UE2. Correspondingly, UE2 receives the first COT indication information from UE0.

For example, UE0 determines that the reserved resource of UE2 is the interlace 0 in the slot n+1, and the priority of transmitting data by UE2 is high. In this case, UE0 determines to share the interlace 0 in the slot n+1 with UE2, to send the first COT indication information to UE2 in the slot n, where the first COT indication information may indicate UE2 to send information by using the interlace 0 in the slot n+1, so that UE2 detects, through listening in the slot n, whether a channel is idle.

S1206: UE1 sends second COT indication information to UE3. Correspondingly, UE3 receives the second COT indication information from UE1.

The second COT indication information indicates UE3 to use the interlace 1 in the slot n+1 to send information. For a specific process of S1006, refer to S1205. Details are not described herein again.

S1207: UE2 accesses a channel based on a preconfigured first channel access type.

The preconfigured first channel access type may be any one of Type2A LBT, Type2B LBT, or Type2C LBT. As shown in FIG. 13, after receiving the first COT indication information in the slot n, UE2 detects, through listening on a reserved symbol, that the channel is idle, and immediately performs channel access based on the preconfigured first channel access type (for example, Type2B LBT). For example, UE2 detects, through listening at a moment t0, that the channel is idle, performs the first channel access type at a moment t1, and after completing the execution, sends a CPE to occupy the channel, so as to send information at a starting position of the slot n+1 by using the resource in the interlace 0.

S1208: UE3 accesses a channel based on a preconfigured first channel access type.

As shown in FIG. 13, after receiving the second COT indication information, UE3 also detects, through listening at the moment t0, that the channel is idle, performs channel access of the first channel access type at the moment t1, and after completing the execution, sends a CPE together with UE2 to occupy the channel, so as to send information at the starting position of the slot n+1 by using the resource in the interlace 1.

It may be understood that S1207 and S1208 are simultaneously performed.

Based on the communication method shown in FIG. 12, when different UEs accessing a same channel share resources in a same slot with different UEs, the UEs using the shared resources may use a same channel access type in a preconfiguration manner. This can avoid a problem that a UE that ends earlier in LBT sends a CPE to occupy a channel due to different LBT end moments caused because UEs using resources shared by different UEs cannot learn of Type2 channel access manners used by each other to perform channel access, and can ensure that the UEs using the shared resources can simultaneously perform LBT and simultaneously send a CPE to occupy a channel, thereby improving resource utilization.

It may be understood that the communication method provided in this embodiment of this application may also be applied to the communication scenario shown in (b) in FIG. 7. In the communication scenario shown in (b) in FIG. 7, a same channel access type may also be preconfigured for UE3, UE2, and UE4 using a shared resource to perform channel access. For example, the first channel access type preconfigured for UE3, UE2, and UE4 is Type2A LBT. For a resource sharing process of UE0 and UE1, refer to S1201 to S1206. Details are not described herein again.

It may be understood that, in a scenario in which one UE shares resources in a same slot with a plurality of UEs, the UEs using the shared resources may also access a channel by using a same preconfigured channel access type. This can avoid a problem of that channel access by another UE using a shared resource is congested because a UE that ends earlier in LBT sends a CPE to occupy a channel.

It may be understood that, in the foregoing embodiments, the methods and/or steps implemented by the first terminal device may alternatively be implemented by a component (for example, a processor, a chip, a chip system, a circuit, a logic module, or software) that may be used in the first terminal device, and the methods and/or steps implemented by the second terminal device may alternatively be implemented by a component (for example, a processor, a chip, a chip system, a circuit, a logic module, or software) that may be used in the second terminal device, to implement the solutions provided in this application.

Correspondingly, this application further provides a communication apparatus. The communication apparatus is configured to implement the methods in the foregoing method embodiments. The communication apparatus may be the first terminal device in the method embodiments, or an apparatus including the first terminal device, or a component that can be used in the first terminal device, for example, a chip or a chip system. Alternatively, the communication apparatus may be the second terminal device in the method embodiments, or an apparatus including the second terminal device, or a component that may be used in the second terminal device, for example, a chip or a chip system.

It may be understood that, to implement the foregoing functions, the communication apparatus includes hardware structures and/or software modules corresponding to the functions. A person skilled in the art should be easily aware that, in combination with units and algorithm steps of the examples described in embodiments disclosed in this specification, this application may be implemented by using hardware or a combination of hardware and computer software. Whether a function is performed by using hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus is divided into functional modules based on the foregoing method embodiments. For example, each functional module corresponding to each function may be obtained through division, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

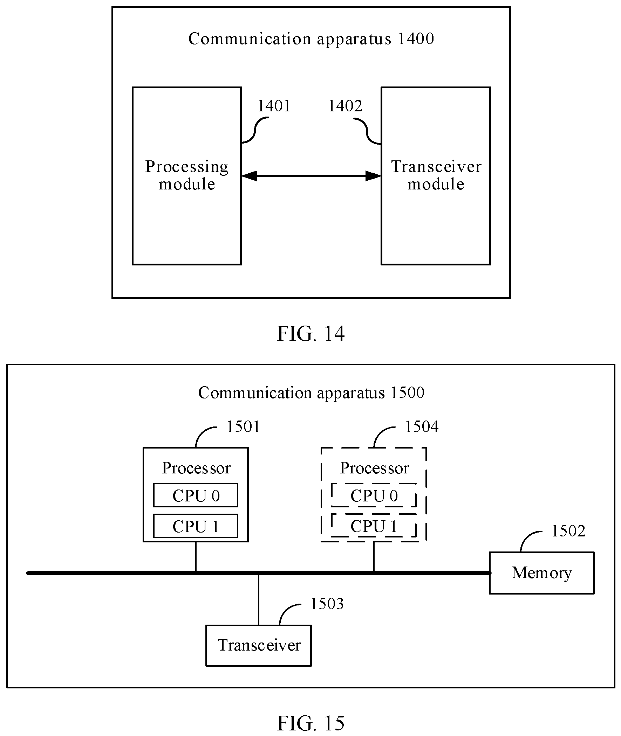

An example in which the communication apparatus is the first terminal device or the second terminal device in the foregoing method embodiment is used. FIG. 14 is a diagram of a structure of a communication apparatus according to an embodiment of this application. As shown in FIG. 14, the communication apparatus 1400 includes a processing module 1401 and a transceiver module 1402.

For example, the communication apparatus 1400 is the first terminal device in the foregoing method embodiment.

The transceiver module 1402 is configured to receive first sidelink control information from at least one second terminal device, where the first sidelink control information indicates a first slot, and the first slot is used by the second terminal device to send information.

The processing module 1401 is configured to determine that the first slot is within a COT.

The transceiver module 1402 is further configured to send first indication information to the at least one second terminal device, where the first indication information indicates the at least one second terminal device to access a channel by using a first channel access type.

In a possible design solution, the first indication information may be carried in second sidelink control information or MAC signaling.

In a possible design solution, the first indication information may be carried in COT indication information.

Optionally, the first channel access type may be any one of the following channel access types: Type2A LBT, Type2B LBT, or Type2C LBT.

In a possible design solution, the first indication information may be indicated by a first bit field, and different bit values of the first bit field indicate any one of the following first channel access types: Type2A LBT, Type2B LBT, or Type2C LBT.

In a possible design solution, the first bit field is one or more bits.

For example, the communication apparatus is the second terminal device in the foregoing method embodiment.

The transceiver module 1402 is configured to send first sidelink control information to a first terminal device, where the first sidelink control information indicates a first slot, and the first slot is used by the communication apparatus to send information.

The processing module 1401 is configured to access a channel based on a first channel access type, where the first channel access type is determined based on first indication information or a preconfiguration.

In a possible design solution, when the first channel access type is determined based on the first indication information, the transceiver module 1402 is further configured to receive the first indication information from the first terminal device, where the first indication information indicates the first channel access type.

In a possible design solution, the first indication information may be carried in second sidelink control information or MAC signaling.

In a possible design solution, the first indication information may be carried in COT indication information.

Optionally, the first channel access type is any one of the following channel access types: Type2A LBT, Type2B LBT, or Type2C LBT.

In a possible design solution, the first indication information may be indicated by a first bit field, and different bit values of the first bit field indicate any one of the following first channel access types: Type2A LBT, Type2B LBT, or Type2C LBT.

In a possible design solution, the first bit field is one or more bits.

In another possible design solution, when the first channel access type is determined based on the pre configuration, the first channel access type is configured for a plurality of terminal devices, and the communication apparatus is one of the plurality of terminal devices.

In a possible design solution, the plurality of terminal devices further include a third terminal device, the third terminal device is a terminal device that accesses a channel by using the preconfigured first channel access type and sends information on a first resource of a fourth terminal device, the fourth terminal device and the first terminal device access a same channel, the first resource and a second resource of the first terminal device are frequency domain resources that do not overlap in the first slot, and the second resource is a resource used by the communication apparatus to send information.

All related content of the steps in the foregoing method embodiments may be cited in function descriptions of the corresponding functional modules. Details are not described herein again.

The communication apparatus 1400 provided in this embodiment may perform the foregoing communication method. Therefore, for technical effects that can be achieved by the communication apparatus, refer to the foregoing method embodiment. Details are not described herein again.

Optionally, in this embodiment of this application, the transceiver module 1402 may include a receiving module and a sending module (not shown in FIG. 14). The transceiver module is configured to implement a sending function and a receiving function of the communication apparatus 1400.

Optionally, the communication apparatus 1400 may further include a storage module (not shown in FIG. 14). The storage module stores a program or instructions. When the processing module 1401 executes the program or the instructions, the communication apparatus 1400 can execute the functions of the first terminal device in the communication method shown in FIG. 9, the functions of the UE1 in the communication method shown in FIG. 10, or the functions of the UE0 in the communication method shown in FIG. 12, or can execute the functions of the second terminal device in the communication method shown in FIG. 9, the functions of the UE2 or the UE3 in the communication method shown in FIG. 10, or the functions of the UE2 in the communication method shown in FIG. 12.

It should be understood that the processing module 1401 in the communication apparatus 1400 may be implemented by a processor or a processor-related circuit component, and may be a processor or a processing unit; and the transceiver module 1402 may be implemented by a transceiver or a transceiver-related circuit component, and may be a transceiver or a transceiver unit.

For example, FIG. 15 is a diagram of a structure of another communication apparatus according to an embodiment of this application. The communication apparatus may be a first terminal device or a second terminal device, or may be a chip (system) or another component or part that may be disposed in the first terminal device or the second terminal device. As shown in FIG. 15, the communication apparatus 1500 may include a processor 1501. Optionally, the communication apparatus 1500 may further include a memory 1502 and/or a transceiver 1503. The processor 1501 is coupled to the memory 1502 and the transceiver 1503, for example, may be connected through a communication bus.

The following describes the components of the communication apparatus 1500 in detail with reference to FIG. 15.

The processor 1501 is a control center of the communication apparatus 1500, and may be one processor, or may be a general term of a plurality of processing elements. For example, the processor 1501 is one or more central processing units (central processing unit, CPU), or may be an application-specific integrated circuit (application-specific integrated circuit, ASIC), or may be one or more integrated circuits configured to implement embodiments of this application, for example, one or more microprocessors (digital signal processor, DSP) or one or more field programmable gate arrays (field programmable gate array, FPGA).

Optionally, the processor 1501 may execute various functions of the communication apparatus 1500 by running or executing a software program stored in the memory 1502 and invoking data stored in the memory 1502.

During specific implementation, in an embodiment, the processor 1501 may include one or more CPUs, for example, a CPU 0 and a CPU 1 shown in FIG. 15.

During specific implementation, in an embodiment, the communication apparatus 1500 may alternatively include a plurality of processors, for example, the processor 1501 and a processor 1504 shown in FIG. 15. Each of the processors may be a single-core processor (single-CPU), or may be a multi-core processor (multi-CPU). The processor herein may be one or more devices, circuits, and/or processing cores configured to process data (for example, computer program instructions).

The memory 1502 is configured to store the software program for performing the solution in this application, and the processor 1501 controls the execution. For a specific implementation, refer to the foregoing method embodiment. Details are not described herein again.

Optionally, the memory 1502 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer. However, this is not limited thereto. The memory 1502 may be integrated with the processor 1501, or may exist independently, and is coupled to the processor 1501 through an interface circuit (not shown in FIG. 15) of the communication apparatus 1500. This is not specifically limited in this embodiment of this application.

The transceiver 1503 is configured to communicate with another communication apparatus. For example, the communication apparatus 1500 is a terminal device, and the transceiver 1503 may be configured to communicate with a network device or communicate with another terminal device. For another example, the communication apparatus 1500 is a network device, and the transceiver 1503 may be configured to communicate with a terminal device or communicate with another network device.

Optionally, the transceiver 1503 may include a receiver and a transmitter (not separately shown in FIG. 15). The receiver is configured to implement a receiving function, and the transmitter is configured to implement a sending function.

Optionally, the transceiver 1503 may be integrated with the processor 1501, or may exist independently, and is coupled to the processor 1501 through an interface circuit (not shown in FIG. 15) of the communication apparatus 1500. This is not specifically limited in this embodiment of this application.

It should be noted that the structure of the communication apparatus 1500 shown in FIG. 15 does not constitute a limitation on the communication apparatus. An actual communication apparatus may include more or fewer components than those shown in the figure, or combine some components, or have different component arrangements.

In addition, for technical effects of the communication apparatus 1500, refer to the technical effects of the communication method in the foregoing method embodiment. Details are not described herein again.

An embodiment of this application provides a communication system. The communication system includes a first terminal device and at least one second terminal device.

In some embodiments, this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to indicate the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to receive computer-executable instructions (the computer-executable instructions are stored in a memory, and may be directly read from the memory, or may be read through another component) and transmit the computer-executable instructions to the processor.

In still another possible implementation, the communication apparatus further includes a communication interface. The communication interface is configured to communicate with a module outside the communication apparatus.

It may be understood that the communication apparatus may be a chip or a chip system. When the communication apparatus is the chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or the instructions are executed by a computer, functions in any one of the foregoing method embodiments are implemented.

This application further provides a computer program product. When the computer program product is executed by a computer, functions in any one of the foregoing method embodiments are implemented.

A person of ordinary skill in the art may understand that, for the purpose of convenient and brief description, for a detailed working process of the foregoing system, apparatus, and unit, refer to a corresponding process in the foregoing method embodiment. Details are not described herein again.

It should be understood that a term "and/or" in this specification describes only an association relationship between associated objects, and indicates that three relationships may exist. For example, A and/or B may indicate the following three cases: Only A exists, both A and B exist, and only B exists, where A and B may be singular or plural. In addition, a character "/" in this specification usually indicates an "or" relationship between associated objects, or may indicate an "and/or" relationship. A specific meaning depends on the context.

In this application, "at least one" means one or more, and "a plurality of" means two or more. In addition, "at least one of the following items (pieces)" or a similar expression thereof means any combination of these items, including any combination of singular items (pieces) or plural items (pieces). For example, at least one of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

It may be understood that the system, apparatuses, and methods described in this application may alternatively be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may be or may not be physically separate, that is, may be located in one place, or may be distributed on a plurality of network units. Parts displayed as units may be or may be not physical units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a special-purpose computer, a computer network, or any other programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of "a plurality of". A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the protection scope of this application. Correspondingly, this specification and the accompanying drawings are merely example descriptions of this application defined by the appended claims, and are deemed to have covered any and all modifications, variations, combinations, or equivalents that fall within the scope of this application. It is clear that a person skilled in the art can make various modifications and variations to this application without departing from the scope of this application. This application is also intended to cover these modifications and variations provided that they fall within the scope of protection defined by the following claims and their equivalent technologies.

**Claims**

**1.** A communication method, wherein the method comprises:

receiving, by a first terminal device, first sidelink control information from at least one second terminal device, wherein the first sidelink control information indicates a first slot, and the first slot is used by the at least one second terminal device to send sidelink information;
determining, by the first terminal device, that the first slot is within a channel occupancy time COT; and
sending, by the first terminal device, first indication information to the at least one second terminal device, wherein the first indication information indicates a first channel access type.

**2.** The method according to claim 1, wherein the first indication information is carried in second sidelink control information or media access control MAC signaling.

3. The method according to claim 1, wherein the first indication information is carried in COT indication information.

4. The method according to any one of claims 1 to 3, wherein the first channel access type is any one of Type2A listen before talk LBT, Type2B LBT, or Type2C LBT.

5. The method according to any one of claims 1 to 4, wherein the first indication information is indicated by a first bit field, and different bit values of the first bit field indicate any one of the following first channel access types: Type2A LBT, Type2B LBT, or Type2C LBT.

6. A communication method, wherein the method comprises:

sending, by a second terminal device, first sidelink control information to a first terminal device, wherein the first sidelink control information indicates a first slot, and the first slot is used by the second terminal device to send sidelink information; and
accessing, by the second terminal device, a channel based on a first channel access type, wherein the first channel access type is indicated by first indication information or the first channel access type is preconfigured.

7. The method according to claim 6, wherein when the first channel access type is indicated by the first indication information, the method further comprises:
receiving, by the second terminal device, the first indication information from the first terminal device, wherein the first indication information indicates the first channel access type.

8. The method according to claim 6 or 7, wherein the first indication information is carried in second sidelink control information or media access control MAC signaling.

9. The method according to claim 6 or 7, wherein the first indication information is carried in COT indication information.

10. The method according to any one of claims 6 to 9, wherein the first channel access type is any one of Type2A listen before talk LBT, Type2B LBT, or Type2C LBT.

11. The method according to any one of claims 6 to 10, wherein the first indication information is indicated by a first bit field, and different bit values of the first bit field indicate any one of the following first channel access types: Type2A LBT, Type2B LBT, or Type2C LBT.

12. The method according to claim 6, wherein when the first channel access type is preconfigured, the first channel access type is configured for a plurality of terminal devices, and the second terminal device is one of the plurality of terminal devices.

13. The method according to claim 12, wherein the plurality of terminal devices further comprise a third terminal device, the third terminal device is a terminal device that accesses a channel by using the preconfigured first channel access type and sends sidelink information on a first resource, the first resource is a resource indicated by a fourth terminal device to the third terminal device, the fourth terminal device and the first terminal device access a same channel, the first resource and a second resource of the first terminal device are frequency domain resources that do not overlap in the first slot, and the second resource is a resource used by the second terminal device to send sidelink information.

14. A communication apparatus, wherein the apparatus comprises a processing module and a transceiver module, wherein

the transceiver module is configured to receive first sidelink control information from at least one second terminal device, wherein the first sidelink control information indicates a first slot, and the first slot is used by the at least one second terminal device to send sidelink information;
the processing module is configured to determine that the first slot is within a channel occupancy time COT; and
the transceiver module is further configured to send first indication information to the at least one second terminal device, wherein the first indication information indicates a first channel access type.

15. The apparatus according to claim 14, wherein the first indication information is carried in second sidelink control information or media access control MAC signaling.

16. The apparatus according to claim 14, wherein the first indication information is carried in COT indication information.

17. The apparatus according to any one of claims 14 to 16, wherein the first channel access type is any one of Type2A listen before talk LBT, Type2B LBT, or Type2C LBT.

18. The apparatus according to any one of claims 14 to 17, wherein the first indication information is indicated by a first bit field, and different bit values of the first bit field indicate any one of the following first channel access types: Type2A LBT, Type2B LBT, or Type2C LBT.

19. A communication apparatus, wherein the apparatus comprises a processing module and a transceiver module, wherein

the transceiver module is configured to send first sidelink control information to a first terminal device, wherein the first sidelink control information indicates a first slot, and the first slot is used by the communication apparatus to send sidelink information; and
the processing module is configured to access a channel based on a first channel access type, wherein the first channel access type is indicated by first indication information or the first channel access type is preconfigured.

20. The apparatus according to claim 19, wherein when the first channel access type is indicated by the first indication information, the transceiver module is further configured to:
receive the first indication information from the first terminal device, wherein the first indication information indicates the first channel access type.

21. The apparatus according to claim 19 or 20, wherein the first indication information is carried in second sidelink control information or media access control MAC signaling.

22. The apparatus according to claim 19 or 20, wherein the first indication information is carried in COT indication information.

23. The apparatus according to any one of claims 19 to 22, wherein the first channel access type is any one of Type2A listen before talk LBT, Type2B LBT, or Type2C LBT.

24. The apparatus according to any one of claims 19 to 23, wherein the first indication information is indicated by a first bit field, and different bit values of the first bit field indicate any one of the following first channel access types: Type2A LBT, Type2B LBT, or Type2C LBT.

25. The apparatus according to claim 19, wherein when the first channel access type is preconfigured, the first channel access type is configured for a plurality of terminal devices, and the communication apparatus is one of the plurality of terminal devices.

26. The apparatus according to claim 25, wherein the plurality of terminal devices further comprise a third terminal device, the third terminal device is a terminal device that accesses a channel by using the preconfigured first channel access type and sends sidelink information on a first resource, the first resource is a resource indicated by a fourth terminal device to the third terminal device, the fourth terminal device and the first terminal device access a same channel, the first resource and a second resource of the first terminal device are frequency domain resources that do not overlap in the first slot, and the second resource is a resource used by the communication apparatus to send sidelink information.

27. A communication system, comprising a first terminal device, a second terminal device, a third terminal device, and a fourth terminal device, wherein

the second terminal device sends first sidelink control information to the first terminal device, wherein the first sidelink control information indicates a first slot, and the first slot is used by the second terminal device to send sidelink information;
the first terminal device receives the first sidelink control information from the second terminal device, and determines that the first slot is within a channel occupancy time COT;
the third terminal device sends third sidelink control information to the fourth terminal device, wherein the fourth terminal device and the first terminal device are terminal devices that access a same channel, the third sidelink control information indicates the first slot, and the first slot is used by the third terminal device to send sidelink information;

the fourth terminal device receives the third sidelink control information from the third terminal device, and determines that the first slot is within the COT;

the second terminal device accesses a channel based on a preconfigured first channel access type; and

the third terminal device accesses a channel based on the preconfigured first channel access type.

28. A communication method, wherein the method comprises: sending, by a second terminal device, first sidelink control information to a first terminal device, wherein the first sidelink control information indicates a first slot, and the first slot is used by the second terminal device to send sidelink information; determining, by the first terminal device, that the first slot is within a channel occupancy COT, and sending first indication information to the second terminal device, wherein the first indication information indicates a first channel access type; and accessing, by the second terminal device, a channel by using the first channel access type.

UE-A
obtains
a COT

| COT indication information | UE-A | Resource shared with UE-B | Resource shared with UE-C |

FIG. 1

10 ms

Radio frame

Subframe

Slot

Symbol

FIG. 2

FIG. 3

Interlace 0, RB0
Interlace 1, RB1

Interlace 0, RB10
Interlace 1, RB11

⋮

Interlace 0, RB90
Interlace 1, RB91

RB

FIG. 4

Contiguous RBs

Alternate RBs

Sub-channel 1

Sub-channel 2

RB set

RB set

(a)

(b)

Sub-channel 1

Sub-channel 2

FIG. 5

EP 4 561 229 A1

| Slot n−1 | Slot n | | Slot n+1 | | Slot n+2 | | |
|---|---|---|---|---|---|---|---|
| UE1 performs Type1 LBT | UE1 sends information | Symbol 13 | Resource shared with UE2 / Resource shared with UE3 | Symbol 13 | Resource shared with UE4 / Resource shared with UE5 | Symbol 13 | Interlace 0 / Interlace 1 |

Time

UE2: Type2A LBT

UE3: Type2B LBT

Type2 LBT

CPE

Type2 LBT

CPE

UE4: Type2A LBT

UE5: Type2B LBT

FIG. 6

FIG. 7

EP 4 561 229 A1

Second terminal
device

First terminal device

Second terminal
device

FIG. 8

| First terminal device | | Second terminal device |
|---|---|---|

S901: First sidelink control information

S902: Determine that a first
slot is within a channel
occupancy time COT

S903: COT indication information

S904: First indication information

S905: Access a channel based on
a first channel access type

FIG. 9

```
   UE1                    UE2                    UE3

                 S1001: SCI1

                           S1002: SCI2

┌──────────────────────┐
│ S1003: Determine,    │
│ based on SCI1 and    │
│ SCI2, that a slot    │
│ n+1 is within a COT  │
└──────────────────────┘

    S1004: COT indication
         information

    S1005: COT indication
         information

    S1006: First indication
         information

    S1007: First indication
         information

              ┌──────────────────┐   ┌──────────────────┐
              │ S1008: Access a  │   │ S1009: Access a  │
              │ channel based on │   │ channel based on │
              │ a first channel  │   │ a first channel  │
              │ access type      │   │ access type      │
              └──────────────────┘   └──────────────────┘
```

FIG. 10

| Slot n−1 | Slot n | Slot n+1 | Slot n+2 | |
|---|---|---|---|---|

| UE1 performs Type1 LBT | UE1 sends information | Symbol 13 | Resource shared with UE2 | Symbol 13 | Resource shared with UE4 | Symbol 13 | Interlace 0 |

Resource shared with UE3 | Resource shared with UE5 | Interlace 1

Time

Type2 LBT

UE2: Type2B LBT
UE3: Type2B LBT

CPE
CPE

t0    t1

Type2 LBT

UE4: Type2A LBT
UE5: Type2A LBT

CPE

FIG. 11

FIG. 12

EP 4 561 229 A1

Slot n−1                          Slot n                          Slot n+1

| UE0 performs Type1 LBT | | UE0 sends information | Symbol 13 | Resource shared with UE2 | Symbol 13 | Interlace 0 |

| UE1 performs Type1 LBT | | UE1 sends information | | Resource shared with UE3 | | Interlace 1 |

Time

Type2 LBT

UE2: Type2B LBT    | | CPE |

UE3: Type2B LBT    | | CPE |

t0        t1

FIG. 13

Communication apparatus 1400

Processing module

1401 1402

Transceiver module

FIG. 14

Communication apparatus 1500

1501

Processor

CPU 0

CPU 1

1504

Processor

CPU 0

CPU 1

1502

Memory

1503

Transceiver

FIG. 15

## INTERNATIONAL SEARCH REPORT

International application No.

**PCT/CN2023/103505**

### A. CLASSIFICATION OF SUBJECT MATTER

H04W 72/04(2023.01)i

According to International Patent Classification (IPC) or to both national classification and IPC

### B. FIELDS SEARCHED

Minimum documentation searched (classification system followed by classification symbols)

IPC:H04

Documentation searched other than minimum documentation to the extent that such documents are included in the fields searched

Electronic data base consulted during the international search (name of data base and, where practicable, search terms used)

CNTXT, DWPI, ENTXT, OETXT, VEN, WPABS, 3GPP: 侧链路控制信息, 侧行, 侧行控制信息, 侧行链路, 侧行链路控制信息, 第二终端, 第一终端, 接入类型, 偏路控制信息, 时隙, 指示, 信道占用时间, COT, first terminal, second terminal, indication, LBT, side link, sci, slot

### C. DOCUMENTS CONSIDERED TO BE RELEVANT

| Category* | Citation of document, with indication, where appropriate, of the relevant passages | Relevant to claim No. |
|---|---|---|
| X | CN 114830697 A (GUANGDONG OPPO MOBILE TELECOMMUNICATIONS CORP., LTD.) 29 July 2022 (2022-07-29)<br>description, paragraphs 202-272 | 1-12, 14-25, 28 |
| A | US 2021314933 A1 (FUJITSU LTD.) 07 October 2021 (2021-10-07)<br>entire document | 1-28 |
| A | CN 114830697 A (GUANGDONG OPPO MOBILE TELECOMMUNICATIONS CORP., LTD.) 29 July 2022 (2022-07-29)<br>entire document | 13, 26-27 |

☐ Further documents are listed in the continuation of Box C.　　☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **20 September 2023** | **20 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/103505**

| Patent document cited in search report | | | Publication date (day/month/year) | Patent family member(s) | | | Publication date (day/month/year) |
|---|---|---|---|---|---|---|---|
| CN | 114830697 | A | 29 July 2022 | None | | | |
| US | 2021314933 | A1 | 07 October 2021 | EP | 3910969 | A1 | 17 November 2021 |
| | | | | EP | 3910969 | A4 | 05 January 2022 |
| | | | | WO | 2020142991 | A1 | 16 July 2020 |
| | | | | KR | 20210095695 | A | 02 August 2021 |
| | | | | KR | 102557859 | B1 | 20 July 2023 |
| | | | | JP | 2022517921 | A | 11 March 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210969867